# EUROPEAN PATENT APPLICATION

(11) **EP 4 686 249 A1**
(43) Date of publication of application: **28.01.2026**
(21) Application number: 24778059.6
(22) Date of filing: 27.03.2024
(51) Int. Cl.: H04W 24/02, H04W 28/08

(54) **COVERAGE AND CAPACITY OPTIMIZATION METHOD AND APPARATUS**

(30) Priority: 31.03.2023 CN 202310364448
(71) Applicant: Huawei Technologies Co., Ltd., Shenzhen, Guangdong 518129 (CN)
(72) Inventor: ZENG, Yu, Shenzhen, Guangdong 518129 (CN); GENG, Tingting, Shenzhen, Guangdong 518129 (CN)
(74) Representative: Maiwald GmbH
(86) International application number: PCT/CN2024/084053
(87) International publication number: WO 2024/199273

(57) **Abstract**

This application provides a coverage and capacity optimization method and apparatus. In technical solutions provided in this application, first coverage and capacity of a first network device in a second time period may be predicted in a first time period, where the second time period is later than the first time period; a first coverage and capacity optimization CCO configuration of the first network device in the second time period may be determined based on the first coverage and capacity; and then first information may be sent to a second network device, where the first information indicates the first CCO configuration. According to the technical solutions provided in this application, coverage and capacity of a first network device are predicted in advance, and a proper CCO configuration is determined for the first network device, so that communication of a terminal device in the first network device is not affected.

## Description

This application claims priority to Chinese Patent Application No. 202310364448.0, filed with the China National Intellectual Property Administration on March 31, 2023 and entitled "COVERAGE AND CAPACITY OPTIMIZATION METHOD AND APPARATUS", which is incorporated herein by reference in its entirety.

### TECHNICAL FIELD

This application relates to the field of wireless communication technologies, and in particular, to a coverage and capacity optimization method and apparatus.

### BACKGROUND

As important content of network deployment, planning, and optimization, coverage and capacity optimization (coverage and capacity optimization, CCO) is used to detect, mitigate, or resolve a cell coverage or cell edge interference problem, to improve network performance. Currently, the 3rd generation partnership project (3rd Generation Partnership Project, 3GPP) supports a base station in performing CCO within a range allowed by a coverage configuration.

Currently, a method for performing CCO by the base station is as follows: The base station determines that a coverage and capacity problem occurs, and then performs CCO based on current coverage and capacity.

However, in this method, a problem that communication of a terminal device is affected (for example, interrupted) occurs.

### SUMMARY

This application provides a coverage and capacity optimization method and apparatus. Coverage and capacity of a first network device are predicted in advance, and a proper CCO configuration is determined for the first network device, so that communication (for example, network access and data exchange) of a terminal device is not affected.

According to a first aspect, this application provides a coverage and capacity optimization method. The method includes: predicting, in a first time period, first coverage and capacity of a first network device in a second time period, where the second time period is later than the first time period; determining a first coverage and capacity optimization CCO configuration of the first network device in the second time period based on the first coverage and capacity; and sending first information to a second network device, where the first information indicates the first CCO configuration.

In an example, the first network device may be a next generation NodeB (next generation network NodeB, gNB), the second network device may also be a gNB, and the first network device and the second network device may be adjacent. Adjacency may be understood as that a service area of the first network device is adjacent to or overlaps a service area of the second network device.

In another example, the first network device may be a central unit (central unit, CU) in a gNB, and the second network device is a distributed unit (distributed unit, DU) in the gNB.

In this technical solution, a coverage and capacity requirement of the first network device at a second moment is predicted at a first moment, and a CCO configuration of the first network device at the second moment is determined based on the coverage and capacity requirement at the second moment. This avoids a problem of a delay in performing CCO based on current coverage and capacity only after a base station determines that a coverage and capacity problem occurs, and improves communication quality of a terminal device in the first network device.

With reference to the first aspect, in a possible implementation, the method further includes: sending second information to the second network device, where the second information indicates that the first CCO configuration is obtained through prediction.

Optionally, the second information may be independent indication information such as text, a number, a symbol, or a graph that is agreed on with the second network device. After receiving the second information, the second network device may determine that the first CCO configuration is obtained based on prediction.

Optionally, the second information may be independent bit (bit) information, to indicate, to the second network device, that the first CCO configuration is obtained based on prediction.

In this implementation, the second information may be used to explicitly prompt the second network device that the first CCO configuration is obtained through prediction, so that the second network device can determine properness of the first CCO configuration, to improve accuracy of the first CCO configuration.

With reference to the first aspect, in a possible implementation, the second information is content included in the first information.

The content included in the first information may be understood as information included in the first information.

In this implementation, the second information may be included in the first information, to implicitly indicate, to the second network device, that the first CCO configuration is obtained based on prediction.

With reference to the first aspect, in a possible implementation, the first information includes at least one of the following content: a number of the first CCO configuration, a number of a cell to which the first CCO configuration is applied, the first CCO configuration, a valid time of the first CCO configuration, a reason for applying the first CCO configuration, an expected effect of applying the first CCO configuration, and prediction accuracy of the first CCO configuration.

In this implementation, the second information is content included in the first information, for example, is the expected effect of the first CCO configuration and/or the prediction accuracy of the first CCO configuration in the first information.

In this implementation, the first information includes an adjustment result and an adjustment reason of the CCO configuration, so that the second network device can make a proper CCO adjustment based on the first CCO configuration of the first network device. This reduces, to some extent, a proportion of a coverage problem that occurs in the second network device because the first network device makes a CCO adjustment.

With reference to the first aspect, in a possible implementation, the first CCO configuration includes M CCO configurations, M is a positive integer greater than 1, and the second information is M.

In this implementation, a plurality of CCO configurations may be sent to implicitly indicate, to the second network device, that the first CCO configuration is obtained through prediction. The second information is a quantity of CCO configurations in the first CCO configuration.

With reference to the first aspect, in a possible implementation, the method further includes: predicting, in the first time period, second coverage and capacity of the second network device in the second time period; determining a second CCO configuration of the second network device in the second time period based on the second coverage and capacity; and sending third information to the second network device, where the third information indicates the second CCO configuration.

In this implementation, the second CCO configuration of the second network device in the second time period may be determined through prediction, to consider a change in a coverage and capacity requirement of the second network device in the second time period. This avoids, to some extent, a coverage problem caused to the second network device because the first network device adjusts the CCO configuration.

With reference to the first aspect, in a possible implementation, the method further includes: receiving fourth information from the second network device, where the fourth information indicates a CCO configuration determined by the second network device for the second network device.

In this implementation, when accepting application of the first CCO configuration to the first network device in the second time period, the second network device may send the fourth information to indicate the CCO configuration determined by the second network device for the second network device.

Optionally, the CCO configuration determined by the second network device for the second network device may be one CCO configuration, or may be a plurality of CCO configurations.

Optionally, the CCO configuration determined by the second network device for the second network device may be the second CCO configuration of the second network device in the second time period, may be a CCO configuration in another time period including the second time period, or may be a CCO configuration in some time periods in the second time period. This is not limited in this application.

Optionally, the fourth information may further include indication information indicating whether the CCO configuration determined by the second network device for the second network device is obtained through prediction.

In an example, the second network device may send a bit to indicate that application of the first CCO configuration to the first network device in the second time period is accepted, and return an adjustment result after determining the CCO configuration of the second network device.

With reference to the first aspect, in a possible implementation, the method further includes: receiving fourth information from the second network device, where the fourth information is used to request to re-determine a CCO configuration.

In this implementation, the second network device considers that precision and accuracy of the first CCO configuration and/or the second CCO configuration determined through prediction do not meet a requirement of the second network device. Therefore, the second network device may request to re-determine the first CCO configuration and/or the second CCO configuration.

In a possible implementation, the second network device may send, to the first network device, indication information for re-inference, a reason for re-inference, precision, accuracy, and a coverage and capacity optimization requirement that the second network device expects the first CCO configuration and/or the second CCO configuration to meet, an expected time for completing re-inference, or other data that helps perform prediction and inference.

In another possible implementation, the second network device may further perform prediction based on received information such as input data used by the first network device in a process of determining the first CCO configuration and/or the second CCO configuration through prediction, a used AI model or a number of an AI model, and a parameter of the AI model.

In this implementation, if the first CCO configuration and/or the second CCO configuration obtained through prediction by the second network device have/has higher precision, higher accuracy, and a better effect, the first CCO configuration and/or the second CCO configuration determined through prediction may be included in the fourth information for feedback.

With reference to the first aspect, in a possible implementation, the method is performed by the first network device.

In this implementation, in an example, the first network device may be a gNB or a DU in a gNB, or may be a chip, a hardware circuit, and/or a software module used in a gNB or a DU in a gNB.

With reference to the first aspect, in a possible implementation, the method is performed by a third network device; and the method further includes: sending the first CCO configuration to the first network device.

In this implementation, in an example, the third network device may be an operation, administration and maintenance (operation, administration and maintenance, OAM) or a CU in a gNB, or may be a chip, a hardware circuit, and/or a software module used in an OAM or a CU in a gNB.

In this implementation, when an execution body is the third network device, the third network device may further send the first CCO configuration to be applied to the first network device in the second time period to the first network device.

Optionally, in addition to sending the first CCO configuration, the third network device may further send information such as the number of the first CCO configuration, the number of the cell to which the first CCO configuration is applied, the valid time of the first CCO configuration, the reason for applying the first CCO configuration, the expected effect of applying the first CCO configuration, and the prediction accuracy of the first CCO configuration to the first network device.

With reference to the first aspect, in a possible implementation, the method further includes: receiving fifth information from the first network device, where the fifth information indicates a CCO configuration determined by the first network device for the first network device.

In this implementation, after receiving the first CCO configuration sent by the third network device, the first network device may determine properness of the first CCO configuration, and then send feedback information to the third network device.

Optionally, if the first network device accepts the first CCO configuration sent by the third network device, the fifth information is the first CCO configuration.

Optionally, if the first network device does not accept the first CCO configuration sent by the third network device, the fifth information may be a CCO configuration determined by the first network device for the first network device based on a coverage and capacity requirement of the first network device.

Optionally, the fifth information may alternatively be information for requesting the third network device to re-determine a CCO configuration for the first network device.

With reference to the first aspect, in a possible implementation, the method further includes: receiving sixth information, where the sixth information includes at least one of the following information: path information of a terminal device, channel quality measurement information of the terminal device, service information of the terminal device, a CCO configuration currently applied to a cell in the first network device, a CCO configuration currently applied to a cell in the second network device, a call drop rate of the terminal device, an access success rate of the terminal device, and an average access delay of the terminal device; and predicting, in the first time period, the first coverage and capacity of the first network device in the second time period includes: predicting, in the first time period, the first coverage and capacity of the first network device in the second time period based on the sixth information.

In this implementation, for ease of description, the terminal device may be briefly referred to as a terminal, a terminal in the first network device or a terminal in each cell in the first network device is referred to as a first terminal, and a terminal in the second network device or a terminal in each cell in the second network device is referred to as a second terminal.

Optionally, the path information of the terminal may include historical path information of the terminal and/or predicted path information of the terminal; the channel quality measurement information of the terminal may include historical channel quality measurement information of the terminal and/or predicted channel quality measurement information of the terminal; and the service information of the terminal may include historical service information of the terminal and/or predicted service information of the terminal.

The predicted path information, the predicted channel quality measurement information, and the predicted service information of the terminal may be respectively obtained by the terminal through prediction based on the historical path information, the historical channel quality measurement information, and the historical service information of the terminal, or may be obtained by the first network device or the second network device through prediction based on the received historical path information, historical channel quality measurement information, and historical service information of the terminal.

In this implementation, when the first coverage and capacity of the first network device in the second time period are determined, not only information about the first terminal is considered, but also information about the second terminal is considered. Therefore, the terminal in the second network device may be moved to the first network device for access. Therefore, a requirement for increasing coverage and capacity of the first network device is considered. This improves accuracy of predicting the first coverage and capacity.

With reference to the first aspect, in a possible implementation, the first coverage and capacity are obtained through prediction based on a neural network model.

In this implementation, obtaining the first coverage and capacity through prediction based on the neural network model is only an optional manner. A model used in a prediction process is not limited in this application.

With reference to the first aspect, in a possible implementation, the method further includes: receiving seventh information, where the seventh information includes at least one of the following information after a CCO configuration is applied to the first network device in the second time period: path information of the terminal device, channel quality measurement information of the terminal device, service information of the terminal device, a CCO configuration currently applied to the cell in the first network device, a CCO configuration currently applied to the cell in the second network device, a call drop rate of the terminal device, an access success rate of the terminal device, and an average access delay of the terminal device; and optimizing the neural network model based on the seventh information.

In this implementation, if actual coverage and capacity requirement change data of the cell in the first network device or the cell in the second network device in the seventh information received by the first network device or the third network device is inconsistent with data obtained through prediction, the neural network model may be trained and optimized based on the actual data, to gradually improve prediction accuracy.

According to a second aspect, this application provides a coverage and capacity optimization method. The method is applied to a second network device, and the method includes: receiving first information, where the first information indicates a first coverage and capacity optimization CCO configuration of a first network device in a second time period.

In this implementation, after receiving the first information, the second network device may properly adjust, based on the first CCO configuration of the first network device, a CCO configuration applied to a cell in the second network device.

Optionally, the first information may further include information such as related data used to determine the first CCO configuration of the first network device through prediction, an AI model used in a prediction process, a number of the AI model, and a parameter of the AI model, so that the second network device can determine properness of the first CCO configuration based on the first information.

With reference to the second aspect, in a possible implementation, second information is received, where the second information indicates that the first CCO configuration is obtained through prediction.

Optionally, the second information may be independent indication information such as text, a number, a symbol, or a graph that is agreed on with the second network device. After receiving the second information, the second network device may determine that the first CCO configuration is obtained through prediction.

Optionally, the second information may be independent bit information, to indicate, to the second network device, that the first CCO configuration is obtained based on prediction.

In this implementation, the second information may be used to explicitly prompt the second network device that the first CCO configuration is obtained based on prediction, so that the second network device can determine properness of the first CCO configuration, to improve accuracy of the first CCO configuration.

With reference to the second aspect, in a possible implementation, the second information is content included in the first information.

The content included in the first information may be understood as information included in the first information.

In this implementation, the second information may be included in the first information, to implicitly indicate, to the second network device, that the first CCO configuration is obtained based on prediction.

With reference to the second aspect, in a possible implementation, the first information includes at least one of the following content: a number of the first CCO configuration, a number of a cell to which the first CCO configuration is applied, the first CCO configuration, a valid time of the first CCO configuration, a reason for applying the first CCO configuration, an expected effect of applying the first CCO configuration, and prediction accuracy of the first CCO configuration.

In this implementation, the second information is content included in the first information, for example, is the expected effect of the first CCO configuration or the prediction accuracy of the first CCO configuration in the first information.

In this implementation, the first information includes an adjustment result and an adjustment reason of the CCO configuration, so that the second network device can make a proper CCO adjustment based on the first CCO configuration of the first network device. This reduces, to some extent, a proportion of a coverage problem that occurs in the second network device because the first network device makes a CCO adjustment.

With reference to the second aspect, in a possible implementation, the first CCO configuration includes M CCO configurations, M is a positive integer greater than 1, and the second information is M.

In this implementation, a plurality of CCO configurations may be sent to implicitly indicate, to the second network device, that the first CCO configuration is obtained through prediction. The second information is a quantity of CCO configurations in the first CCO configuration.

With reference to the second aspect, in a possible implementation, the method further includes: receiving third information, where the third information indicates a second CCO configuration of the second network device in the second time period.

In this implementation, the second CCO configuration of the second network device in the second time period is determined through prediction, to consider a change in a coverage and capacity requirement of the second network device in the second time period. This avoids, to some extent, a coverage problem caused to the second network device because the first network device adjusts the CCO configuration.

With reference to the second aspect, in a possible implementation, the method further includes: sending fourth information, where the fourth information indicates a CCO configuration determined by the second network device for the second network device.

In this implementation, when accepting application of the first CCO configuration to the first network device in the second time period, the second network device may send the fourth information to indicate the CCO configuration determined by the second network device for the second network device.

With reference to the second aspect, in a possible implementation, the method further includes: sending fourth information, where the fourth information is used to request to re-determine a CCO configuration.

In this implementation, the second network device considers that precision and accuracy of the first CCO configuration and/or the second CCO configuration determined through prediction do not meet a requirement of the second network device. Therefore, the second network device may request to re-determine the first CCO configuration and/or the second CCO configuration.

With reference to the second aspect, in a possible implementation, the method further includes: sending sixth information, where the sixth information includes at least one of the following information: path information of a terminal device, channel quality measurement information of the terminal device, service information of the terminal device, a CCO configuration currently applied to a cell in the second network device, a call drop rate of the terminal device, an access success rate of the terminal device, and an average access delay of the terminal device.

In this implementation, when a first coverage and capacity of the first network device in the second time period are determined, not only information about a terminal in the first network device is considered, but also information about a terminal in the second network device is considered. Therefore, the terminal in the second network device may be moved to the first network device for access. Therefore, a requirement for increasing coverage and capacity of the first network device is considered. In addition, the terminal in the first network device may be moved to the second network device for access. Therefore, a requirement for increasing coverage and capacity of the second network device is considered. This improves accuracy of predicting the first coverage and capacity.

With reference to the second aspect, in a possible implementation, the method further includes: sending seventh information, where the seventh information includes at least one of the following information after a CCO configuration is applied to the first network device in the second time period: path information of the terminal device, channel quality measurement information of the terminal device, service information of the terminal device, a CCO configuration currently applied to the cell in the second network device, a call drop rate of the terminal device, an access success rate of the terminal device, and an average access delay of the terminal device.

The terminal device is a terminal device in the second network device.

In this implementation, the second network device feeds back running information of the second network device after the CCO configuration is applied to the first network device in the second time period, to determine a similarity between actual coverage and capacity requirement change data of the cell in the second network device and data obtained through prediction, so as to determine prediction accuracy of a neural network model.

According to a third aspect, this application provides a coverage and capacity optimization method. The method is applied to a terminal device, and the method includes: sending sixth information, where the sixth information includes at least one of the following information: path information of the terminal device, channel quality measurement information of the terminal device, and service information of the terminal device.

In this implementation, the terminal device may be a terminal device in a first network device or a cell in a first network device, or may be a terminal device in a second network device or a cell in a second network device.

With reference to the third aspect, in a possible implementation, the method further includes: sending seventh information, where the seventh information includes at least one of the following information after a CCO configuration is applied to the first network device in a second time period: path information of the terminal device, channel quality measurement information of the terminal device, and service information of the terminal device.

According to a fourth aspect, this application provides a coverage and capacity optimization apparatus. The apparatus includes modules configured to implement the method in any one of the first aspect or the implementations of the first aspect, and each module may be implemented in a form of hardware and/or software.

For example, the apparatus may include a processing module and a transceiver module. The processing module is configured to predict, in a first time period, first coverage and capacity of a first network device in a second time period, where the second time period is later than the first time period. The processing module is further configured to determine a first coverage and capacity optimization CCO configuration of the first network device in the second time period based on the first coverage and capacity. The transceiver module is configured to send first information to a second network device, where the first information indicates the first CCO configuration.

With reference to the fourth aspect, in a possible implementation, the transceiver module is further configured to send second information to the second network device, where the second information indicates that the first CCO configuration is obtained through prediction.

With reference to the fourth aspect, in a possible implementation, the processing module is further configured to predict, in the first time period, second coverage and capacity of the second network device in the second time period; the processing module is further configured to determine a second CCO configuration of the second network device in the second time period based on the second coverage and capacity; and the transceiver module is further configured to send third information to the second network device, where the third information indicates the second CCO configuration.

With reference to the fourth aspect, in a possible implementation, the transceiver module is further configured to receive fourth information from the second network device, where the fourth information indicates a CCO configuration determined by the second network device for the second network device.

With reference to the fourth aspect, in a possible implementation, the transceiver module is further configured to receive fourth information from the second network device, where the fourth information is used to request to re-determine a CCO configuration.

With reference to the fourth aspect, in a possible implementation, the transceiver module is further configured to send the first CCO configuration to the first network device.

With reference to the fourth aspect, in a possible implementation, the transceiver module is further configured to receive fifth information from the first network device, where the fifth information indicates a CCO configuration determined by the first network device for the first network device.

With reference to the fourth aspect, in a possible implementation, the transceiver module is further configured to receive sixth information, where the sixth information includes at least one of the following information: path information of a terminal device, channel quality measurement information of the terminal device, service information of the terminal device, a CCO configuration currently applied to a cell in the first network device, a CCO configuration currently applied to a cell in the second network device, a call drop rate of the terminal device, an access success rate of the terminal device, and an average access delay of the terminal device; and the processing module is further configured to predict, in the first time period, the first coverage and capacity of the first network device in the second time period based on the sixth information.

With reference to the fourth aspect, in a possible implementation, the processing module is further configured to obtain the first coverage and capacity through prediction based on a neural network model.

With reference to the fourth aspect, in a possible implementation, the transceiver module is further configured to receive seventh information, where the seventh information includes at least one of the following information after a CCO configuration is applied to the first network device in the second time period: path information of the terminal device, channel quality measurement information of the terminal device, service information of the terminal device, a CCO configuration currently applied to the cell in the first network device, a CCO configuration currently applied to the cell in the second network device, a call drop rate of the terminal device, an access success rate of the terminal device, and an average access delay of the terminal device; and the processing module is further configured to optimize the neural network model based on the seventh information.

According to a fifth aspect, this application provides a coverage and capacity optimization apparatus. The apparatus includes modules configured to implement the method in any one of the second aspect or the implementations of the second aspect, and each module may be implemented in a form of hardware and/or software.

For example, the apparatus may include a transceiver module. The transceiver module is configured to receive first information, where the first information indicates a first coverage and capacity optimization CCO configuration of a first network device in a second time period.

With reference to the fifth aspect, in a possible implementation, the transceiver module is further configured to receive second information, where the second information indicates that the first CCO configuration is obtained through prediction.

With reference to the fifth aspect, in a possible implementation, the transceiver module is further configured to receive third information, where the third information indicates a second CCO configuration of a second network device in the second time period.

With reference to the fifth aspect, in a possible implementation, the transceiver module is further configured to send fourth information, where the fourth information indicates a CCO configuration determined by the second network device for the second network device.

With reference to the fifth aspect, in a possible implementation, the transceiver module is further configured to send fourth information, where the fourth information is used to request to re-determine a CCO configuration.

With reference to the fifth aspect, in a possible implementation, the transceiver module is further configured to send sixth information, where the sixth information includes at least one of the following information: path information of a terminal device, channel quality measurement information of the terminal device, service information of the terminal device, a CCO configuration currently applied to a cell in the second network device, a call drop rate of the terminal device, an access success rate of the terminal device, and an average access delay of the terminal device.

With reference to the fifth aspect, in a possible implementation, the transceiver module is further configured to send seventh information, where the seventh information includes at least one of the following information after a CCO configuration is applied to the first network device in the second time period: path information of the terminal device, channel quality measurement information of the terminal device, service information of the terminal device, a CCO configuration currently applied to the cell in the second network device, a call drop rate of the terminal device, an access success rate of the terminal device, and an average access delay of the terminal device.

Optionally, the apparatus may further include a processing module. The processing module is configured to determine a CCO configuration for the second network device.

According to a sixth aspect, this application provides a coverage and capacity optimization apparatus. The apparatus includes modules configured to implement the method in any one of the third aspect or the implementations of the third aspect, and each module may be implemented in a form of hardware and/or software.

For example, the apparatus may include a transceiver module. The transceiver module is configured to send sixth information, where the sixth information includes at least one of the following information: path information of a terminal device, channel quality measurement information of the terminal device, and service information of the terminal device.

With reference to the sixth aspect, in a possible implementation, the transceiver module is further configured to send seventh information, where the seventh information includes at least one of the following information after a CCO configuration is applied to a first network device in a second time period: path information of the terminal device, channel quality measurement information of the terminal device, and service information of the terminal device.

According to a seventh aspect, this application provides a coverage and capacity optimization apparatus, including a processor. The processor is coupled to a memory, and may be configured to execute instructions in the memory, to implement the method in any one of the first aspect or the possible implementations of the first aspect. Optionally, the apparatus further includes the memory. Optionally, the apparatus further includes a communication interface, and the processor is coupled to the communication interface.

Optionally, the apparatus may be a base station or a CU, a DU, or an OAM in a base station, or may be a chip used in a base station or a CU, a DU, or an OAM in a base station.

According to an eighth aspect, this application provides a coverage and capacity optimization apparatus, including a processor. The processor is coupled to a memory, and may be configured to execute instructions in the memory, to implement the method in any one of the second aspect or the possible implementations of the second aspect. Optionally, the apparatus further includes the memory. Optionally, the apparatus further includes a communication interface, and the processor is coupled to the communication interface.

Optionally, the apparatus may be a base station or a CU or a DU in a base station, or may be a chip used in a base station or a CU or a DU in a base station.

According to a ninth aspect, this application provides a coverage and capacity optimization apparatus, including a processor. The processor is coupled to a memory, and may be configured to execute instructions in the memory, to implement the method in any one of the third aspect or the possible implementations of the third aspect. Optionally, the apparatus further includes the memory. Optionally, the apparatus further includes a communication interface, and the processor is coupled to the communication interface.

Optionally, the apparatus may be a terminal device, or may be a chip used in a terminal device.

According to a tenth aspect, this application provides a communication system. The system includes the apparatus in the fourth aspect or the seventh aspect, the apparatus in the fifth aspect or the eighth aspect, and the apparatus in the sixth aspect or the ninth aspect.

According to an eleventh aspect, this application provides a computer-readable medium. The computer-readable medium stores program code for execution by a device, and the program code includes instructions for performing the method in any one of the first aspect, the second aspect, the third aspect, or the possible implementations of the first aspect, the second aspect, or the third aspect.

According to a twelfth aspect, this application provides a computer program product including instructions. When the computer program product is run on a computer, the computer is enabled to perform the method in any one of the first aspect, the second aspect, the third aspect, or the possible implementations of the first aspect, the second aspect, or the third aspect.

### BRIEF DESCRIPTION OF DRAWINGS

FIG. 1 is a diagram of a network architecture according to an embodiment of this application;
FIG. 2 is a diagram of a network architecture according to another embodiment of this application;
FIG. 3 is a framework diagram of application of AI to a communication system according to an embodiment of this application;
FIG. 4 is a schematic flowchart of a coverage and capacity optimization method according to Embodiment 1 of this application;
FIG. 5 is a schematic flowchart of a coverage and capacity optimization method according to Embodiment 2 of this application;
FIG. 6 is a schematic flowchart of a coverage and capacity optimization method according to Embodiment 3 of this application;
FIG. 7 is a schematic flowchart of a coverage and capacity optimization method according to Embodiment 4 of this application;
FIG. 8 is a schematic flowchart of another coverage and capacity optimization method according to Embodiment 4 of this application;
FIG. 9 is a diagram of a structure of a coverage and capacity optimization apparatus according to an embodiment of this application; and
FIG. 10 is a diagram of a structure of a coverage and capacity optimization apparatus according to another embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application to a person skilled in the art with reference to particular embodiments.

### DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent same or similar elements. Implementations described in the following example embodiments do not represent all implementations consistent with this application. On the contrary, the implementations are merely examples of apparatuses and methods that are described in the appended claims in detail and that are consistent with some aspects of this application.

As important content of network deployment, planning, and optimization, coverage and capacity optimization (coverage and capacity optimization, CCO) is used to detect, mitigate, or resolve a cell coverage or cell edge interference problem.

A radio access network (next generation radio access network, NG-RAN) node may perform CCO within a range allowed by a network coverage configuration. For example, after determining that a coverage and capacity problem occurs, a base station (next generation network NodeB, gNB) selects a proper CCO configuration from a preset CCO configuration based on a current coverage and capacity or coverage requirement, to optimize and adjust coverage and capacity of the station.

Optionally, the CCO configuration may be sent by an operation, administration and maintenance (operation, administration and maintenance, OAM) to the base station in a form of a list.

The CCO configuration usually includes a parameter configuration related to network coverage and a specific adjustment range of each parameter. For example, the CCO configuration includes a cell global identity (cell global identity, CGI) of each cell in the base station, a coverage status indicator of each cell, an index identifier of a synchronization signal/physical broadcast channel block (SS (synchronization signal)/PBCH Block, SSB) in each cell, and a coverage status indicator of each SSB.

The NG-RAN node may further send an adjustment result of the station to a neighboring NG-RAN node by using an NG-RAN node configuration update message (NG-RAN node configuration update), so that a neighboring station makes a corresponding adjustment, and feeds back a corresponding adjustment result to the station.

For example, when the neighboring station determines that at a cell edge in a specific direction on a horizontal plane, there are a large quantity of terminal devices to which cell services need to be provided, the neighboring station increases a coverage area in the specific direction by increasing downlink power, adjusting an SSB direction and a width, or in another manner. For another example, when the neighboring station determines that at a cell edge in a specific direction on a vertical plane, there are a large quantity of terminal devices to which services need to be provided, the neighboring station increases a coverage area in the specific direction by adjusting an antenna elevation angle, adjusting an SSB direction, or in another manner.

The NG-RAN node configuration update message may be in a form of a list. The list may include a CGI of each cell that needs to be modified, a coverage status indicator of each cell, and an index identifier and a coverage status indicator of an SSB that needs to be modified in each cell. The coverage status indicator may indicate the neighboring node for receiving the NG-RAN configuration update message to use, when adjusting a mobility robustness optimization function, a CCO configuration matching a CCO configuration of a neighboring cell.

However, the foregoing method is post-event. That is, after determining that there is a coverage problem, the base station selects a CCO configuration that can meet a current coverage requirement, resulting in a delay between a time at which the base station executes the CCO configuration and a start time at which the coverage problem occurs in the base station. During this delay, the coverage requirement of the base station may change. Consequently, the CCO configuration cannot meet a coverage requirement after the delay, and communication of a terminal device in the base station is affected (for example, interrupted).

In addition, in the foregoing method, when determining the CCO configuration, the station considers only the coverage requirement of the station. Consequently, after the neighboring station makes a corresponding adjustment, there is a coverage problem in the neighboring station.

In view of this, this application provides a coverage and capacity optimization method and apparatus. A coverage and capacity or coverage area problem that may exist in future in a base station is predicted by using artificial intelligence (artificial intelligence, AI), to determine a proper CCO configuration, and an adjustment result and reason with richer content are notified to a neighboring station, to ensure that the neighboring station can make a proper CCO adjustment.

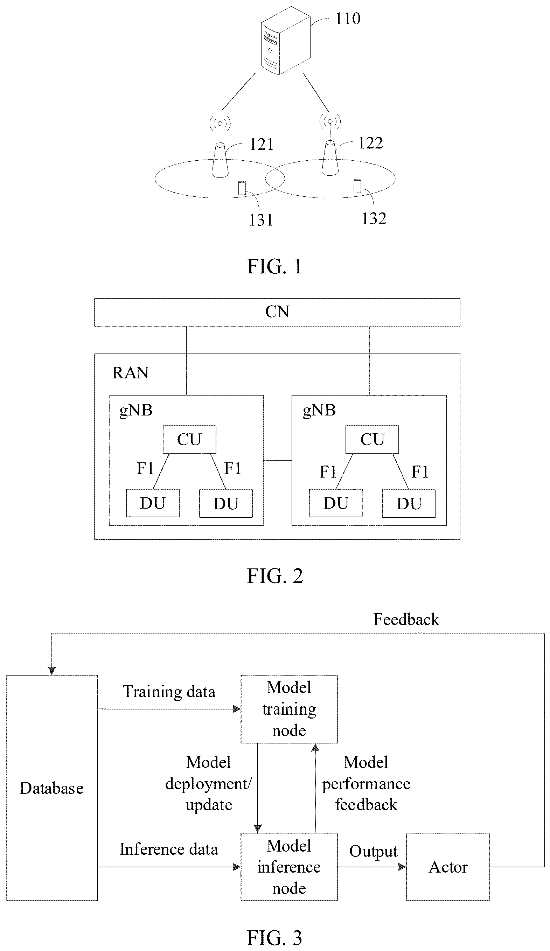

The technical solutions provided in embodiments of this application are applicable to a plurality of communication systems, for example, a 5G network system or a future communication system. For example, FIG. 1 is a diagram of a network architecture according to an embodiment of this application. As shown in FIG. 1, the network architecture includes a core network (core network, CN) device 110, a RAN device (for example, a RAN device 121 or a RAN device 122), and a terminal device (for example, a terminal device 131 or a terminal device 132).

The terminal device may be briefly referred to as a terminal, and may be a wireless terminal or a wired terminal. For example, the wireless terminal may be a device that provides voice and/or data connectivity to a user, a handheld device with a wireless connection function, or another processing device connected to a wireless modem. The wireless terminal may communicate with one or more CN devices through the RAN device. The wireless terminal may be a mobile terminal, for example, a mobile phone (or referred to as a "cellular" phone), or may be a computer having a mobile terminal, for example, a portable, pocket-sized, handheld, computer-built-in, or vehicle-mounted mobile apparatus. The wireless terminal may exchange a language and/or data with a RAN, for example, may exchange a language and/or data with the RAN through a device such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The wireless terminal may also be referred to as a system, a subscriber unit (subscriber unit, SU), a subscriber station (subscriber station, SS), a mobile station (mobile station, MB), a mobile (mobile), a remote station (remote station, RS), an access point (access point, AP), a remote terminal (remote terminal, RT), an access terminal (access terminal, AT), a user terminal (user terminal, UT), a user agent (user agent, UA), a terminal device (user device, UD), or user equipment (user equipment, UE).

In embodiments of this application, an apparatus configured to implement a function of the terminal device may be a terminal device, or may be a chip system, a hardware circuit, and/or a software module installed in the terminal device.

The RAN device is a node or a device that can connect a terminal to a wireless network, and the RAN device may also be referred to as a network device or a base station. For example, the RAN device includes but is not limited to a base station, a next generation NodeB (generation NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB), a baseband unit (baseband unit, BBU), a transmission/reception point (transmission/reception point, TRP), a transmission point (transmission point, TP), a mobile switching center, and/or the like. Alternatively, the RAN device may be at least one of a radio controller, a central unit (central unit, CU), a distributed unit (distributed unit, DU), a central unit control plane (CU control plane, CU-CP) node, and a central unit user plane (CU user plane, CU-UP) node in a cloud radio access network (cloud radio access network, CRAN) scenario. Alternatively, the RAN device may be a relay station, an access point, a vehicle-mounted device, a terminal, a wearable device, a RAN device in a future 5G network, a RAN device in a future evolved public land mobile network (public land mobile network, PLMN), or the like.

In embodiments of this application, an apparatus configured to implement a function of the RAN device may be a RAN device, or may be a chip system, a hardware circuit, and/or a software module installed in the RAN device.

In embodiments of this application, a base station is used as the RAN device to describe the technical solutions provided in embodiments of this application.

For example, FIG. 2 is a diagram of a network architecture according to another embodiment of this application. As shown in FIG. 2, a base station may include a CU and a DU. A plurality of DUs may share one CU, and an interface between the CU and the DU may be referred to as an F1 interface. The CU and the DU may be physically separated, or may be deployed together.

Optionally, one DU may be connected to a plurality of CUs.

In an example, functions of the CU and the DU may be obtained through division based on a protocol layer of a wireless network.

For example, a possible division manner is as follows: The CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, and a physical (physical, PHY) layer.

For example, a possible division manner is as follows: The CU is configured to perform functions of an RRC layer, an SDAP layer, and a PDCP layer, and may further perform some functions of an RLC layer, and the DU is configured to perform remaining functions of the RLC layer and functions of a MAC layer and a PHY layer.

In another example, in a design, a function of the CU or the DU may be obtained through division based on a service type or another system requirement. For example, division may be performed based on a delay. A function whose processing time needs to meet a delay requirement is set on the DU, and a function whose processing time does not need to meet the delay requirement is set on the CU. In another design, the CU may alternatively have one or more functions of a core network. For example, the CU may be disposed on a network side to facilitate centralized management. In another design, a radio unit (radio unit, RU) of the DU is disposed remotely. The RU has a radio frequency function.

Optionally, the function of the CU may be implemented by one entity, or may be implemented by different entities. For example, the function of the CU may be further divided. That is, a control plane and a user plane of the CU are separated and implemented by different entities, which are specifically a CU control plane entity (CU-CP entity) and a CU user plane entity (CU-UP entity). The CU-CP entity and the CU-UP entity may be coupled to the DU, to jointly complete a function of the base station.

Optionally, a function of the CU-CP entity may be further divided. For example, the existing CU-CP entity is further divided into a CU-CP1 entity and a CU-CP2 entity. The CU-CP1 entity includes various radio resource management functions, and the CU-CP2 entity includes only an RRC function and a PDCP-C function (namely, a basic function of control plane signaling at the PDCP layer).

The CN may include one or more CN devices. A 5th (5th generation, 5G) communication system is used as an example. In this case, the CN may include an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, and the like.

In embodiments of this application, an apparatus configured to implement a function of the CN device may be a CN device, or may be a chip system, a hardware circuit, and/or a software module installed in the CN device.

The technical solutions provided in this application are a process of determining a CCO configuration based on AI prediction. For ease of understanding, an AI technology is first described. It may be understood that the descriptions are not intended to limit embodiments of this application.

AI is a technology in which a complex calculation is performed by simulating a human brain. With the improvement of data storage and capabilities, AI is increasingly applied. The 3rd generation partnership project (3rd generation partnership project, 3GPP) release 17 (Release 17, R17) approves a study item (study item, SI) proposing application of AI to a new radio (new radio, NR) network, to improve network performance and user experience through intelligent data collection and analysis.

For example, FIG. 3 is a framework diagram of application of AI to a communication system. As shown in FIG. 3, the application system includes a database (data collection), a model training node (model training host), a model inference node (model inference host), and an actor (actor) entity.

The database is used to store data used for AI model training and data analysis, including data from a gNB, a CU, a DU, a terminal, or another management entity.

The model training node performs analysis or training by using training data (training data) provided by the database, to obtain an AI model, deploys the AI model in the model inference node, and may optimize and update the AI model.

The model inference node uses the AI model to obtain an inference result based on inference data (inference data) provided by the database. The inference result is used to provide proper AI-based prediction for network running or direct a network to make a configuration adjustment.

The actor entity is configured to: plan related configuration adjustments in a unified manner, and send the configuration adjustment to a plurality of execution objects (for example, network entities) for execution. In addition, after a related configuration is applied, a specific representation of the network may be input to the database again for storage.

An AI module is a module having a machine learning computing capability. In a wireless communication system, the AI module is mainly configured to perform a series of AI calculations such as model establishment, training approximation, and reinforcement learning based on data input to the AI module. The data includes data provided by a RAN device or network running data obtained by an OAM through monitoring, for example, data such as network load and channel quality.

The AI model trained by the AI module may be used to predict a network change of the RAN device, for example, may be used to predict a UE trajectory, a network coverage requirement of the RAN device, and the like. The AI module may further infer a prediction result from a perspective of network mobility robustness optimization and the like based on the trained AI model, to determine a proper CCO configuration.

In the wireless communication system, the AI module may be located in an OAM or some UEs, may be located in a gNB, a CU, or a DU, or may be an independent network element entity AIC.

When the AI module is located in the OAM, an existing northbound interface may be reused to communicate with the gNB. When the AI module is located in the gNB, the CU, or the DU, a current interface such as F1, Xn, or Uu may be reused. The F1 interface may be used for communication between the CU and the DU, the Xn interface may be used for communication between gNBs, and the Uu interface may be used for communication between the RAN device and a terminal. When the AI module is an independent network entity, a communication link from the AI module to the OAM, the RAN device, or the like needs to be reestablished. The communication link may be a wired link or a wireless link.

In a possible implementation, when a CU-CP entity and a CU-UP entity of the CU are separated, the CU-CP entity is usually responsible for receiving the AI model and a subsequent AI prediction function. When the CU-CP entity is further divided into a CU-CP1 entity and a CU-CP2 entity, the CU-CP1 entity is usually responsible for receiving the AI model, the subsequent AI prediction function, and generating specific interaction signaling, and the CU-CP2 entity sends the interaction signaling.

### Embodiment 1

Embodiment 1 of this application provides a coverage and capacity optimization method. The method may be performed by an AI module, and the AI module may be located in a first network device or a third network device.

In an example, the first network device may be a gNB, and the third network device may be an OAM.

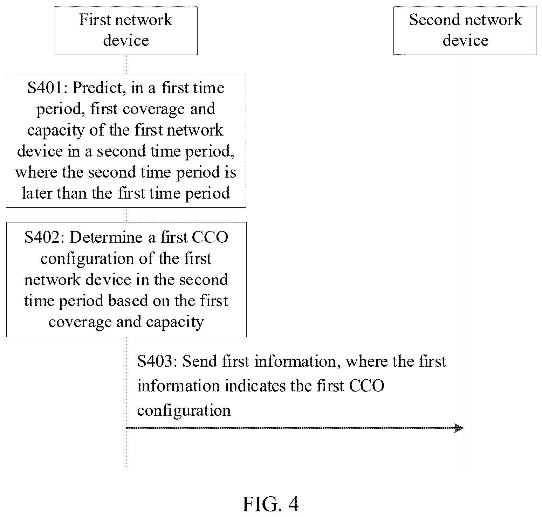

FIG. 4 is a schematic flowchart of a coverage and capacity optimization method according to Embodiment 1 of this application. In the method shown in FIG. 4, the first network device performs a process of determining a CCO configuration through AI prediction. As shown in FIG. 4, the method includes at least S401, S402, and S403.

S401: Predict, in a first time period, first coverage and capacity of the first network device in a second time period, where the second time period is later than the first time period.

In a possible implementation, the first coverage and capacity of the first network device in the second time period may be predicted in the first time period by obtaining historical information of a terminal in the first network device.

The historical information of the terminal may include historical path information of the terminal, historical channel quality measurement information of the terminal, and historical service information of the terminal. The historical path information of the terminal may include information about a cell that the terminal historically accesses and information about a time at which a connection to the cell is established, information about a cell that the terminal historically camps on and information about a time of camping on the cell, historical longitude and latitude information of the terminal, historical moving speed information of the terminal, historical moving direction information of the terminal, and the like. The historical channel quality measurement information of the terminal may include a historical downlink reference signal measurement result of the terminal. The historical service information of the terminal may include a historical service type (for example, a voice service, a video service, or a quality of service (quality of service, QoS) flow parameter) of the terminal, duration information of each historical service of the terminal, and the like.

Optionally, the historical information of the terminal in the first network device may be obtained from report information such as a radio link failure (radio link failure, RLF) report, a successful handover report (successful handover report, SHR), a random access channel (random access channel, RACH) report, and a connection establishment failure (connection establishment failure, CEF) report reported by the terminal, or may be obtained from a local server of the first network device or a core network, or a specific measurement manner may be configured for the terminal.

In this implementation, for example, path information of the terminal in the second time period may be predicted based on a historical path of the terminal in the first network device, and service information of the terminal in the second time period may be predicted based on the historical service information of the terminal, so that a coverage requirement of the first network device in the second time period can be predicted; and channel quality measurement information of the terminal in the second time period may be predicted based on the historical channel quality measurement information of the terminal, and with reference to the service information that is of the terminal in the second time period and that is obtained through prediction, a capacity requirement of the first network device in the second time period may be predicted, to obtain the first coverage and capacity of the first network device in the second time period through prediction.

It should be noted that a manner of predicting the first coverage and capacity is not limited in this embodiment.

S402: Determine a first CCO configuration of the first network device in the second time period based on the first coverage and capacity.

In a possible implementation, after the first coverage and capacity of the first network device in the second time period are obtained through prediction, it may be determined whether a CCO configuration currently applied to the first network device meets the first coverage and capacity. If the CCO configuration currently applied to the first network device meets the first coverage and capacity, the CCO configuration currently applied to the first network device may be used as the first CCO configuration. If the CCO configuration currently applied to the first network device does not meet the first coverage and capacity, a CCO configuration that meets the first coverage and capacity may be selected from a preset CCO configuration as the first CCO configuration.

For example, if it is predicted that compared with coverage and capacity of the first network device in the first time period, the first coverage and capacity of the first network device in the second time period indicate that at a cell edge in a specific direction on a horizontal plane, there are a large quantity of terminals to which cell services need to be provided, a CCO configuration with a large coverage area in the direction may be selected as the first CCO configuration while it is ensured that another coverage requirement is met.

Optionally, the first CCO configuration may be one CCO configuration, or may be a plurality of CCO configurations. The plurality of CCO configurations are applicable to coverage and capacity of the first network device in a plurality of time periods in the second time period.

For example, if the second time period is 19:00 to 19:30, a configuration 1 in the first CCO configuration is applicable to a time period of 19:00 to 19:10, and a configuration 2 is applicable to a time period of 19:10 to 19:30.

In this implementation, optionally, a CCO configuration currently applied to a second network device may be further obtained, and it may be determined, based on the CCO configuration currently applied to the first network device and the CCO configuration currently applied to the second network device, whether the current CCO configuration meets the first coverage and capacity, to improve accuracy and properness of the first CCO configuration.

The second network device may be a device of a same type adjacent to the first network device. For example, when the first network device is gNB1, the second network device may be gNB2 adjacent to gNB1. That the first network device is adjacent to the second network device may be understood as that a service area of the first network device is adjacent to or overlaps a service area of the second network device.

Optionally, after the first CCO configuration of the first network device in the second time period is determined, a CCO configuration historically applied to the first network device and network performance when each CCO configuration is applied to the first network device may be further obtained, to predict network performance when the first CCO configuration is applied to the first network device, so as to further determine properness of the first CCO configuration. The network performance may include information such as a call drop rate of the terminal in the first network device in a cell or at a cell edge, an access success rate of the terminal, or an average access delay of the terminal when the CCO configuration is applied to the first network device.

S403: Send first information to the second network device, where the first information indicates the first CCO configuration.

In this embodiment, after the first CCO configuration of the first network device in the second time period is determined, the first information indicating the first CCO configuration may be sent to the second network device through an Xn interface or an NG interface, so that the second network device can adjust a CCO configuration of the second network device based on the first CCO configuration, to meet a coverage and capacity requirement of the second network device.

In this embodiment, optionally, if the method is performed by the third network device, the third network device may also perform S401, S402, and S403. When performing S403, the third network device may further send, to the first network device, information indicating the first CCO configuration, so that the first network device can make a CCO adjustment based on the first CCO configuration.

In this embodiment, a coverage and capacity requirement of the first network device at a second moment is predicted at a first moment by using a prediction function of the AI module, and a CCO configuration of the first network device at the second moment is determined based on the coverage and capacity requirement at the second moment. This avoids a problem of a delay in performing CCO based on current coverage and capacity only after a base station determines that a coverage and capacity problem occurs, and improves communication quality of the terminal in the first network device.

### Embodiment 2

Embodiment 2 of this application provides a coverage and capacity optimization method. The method may be performed by an AI module. The AI module may be integrated into an existing module of a first network device, or may be independently disposed in a first network device.

In an example, the first network device may be gNB1, and a second network device may be gNB2. Interaction may be performed between gNB1 and gNB2 through an Xn interface, or may be performed through a core network NG interface. Modules for interaction between gNB 1 and gNB2 may be located in gNB1, gNB1-CU, gNB2, and gNB2-CU.

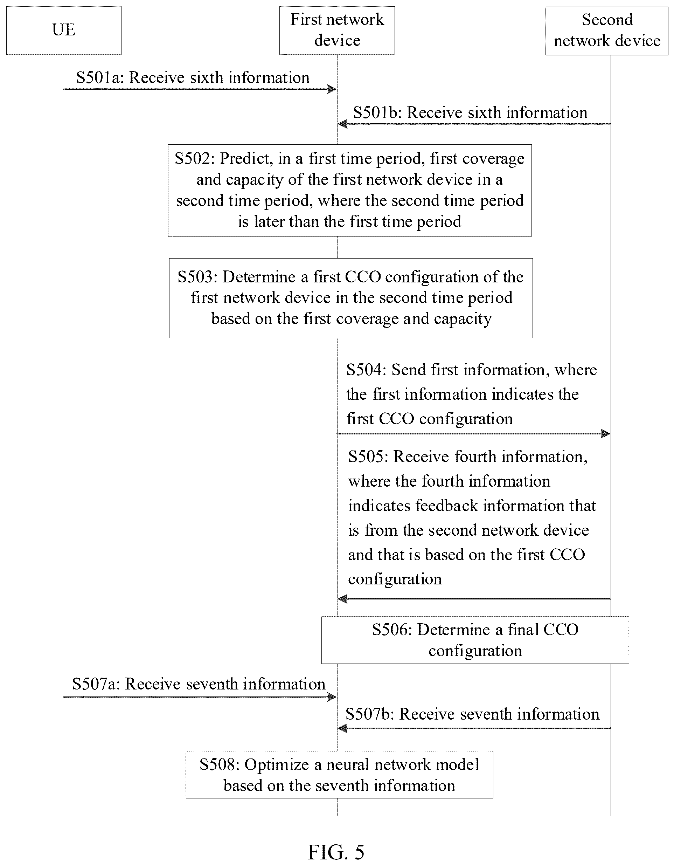

As shown in FIG. 5, a schematic flowchart of a coverage and capacity optimization method is provided. The method includes at least S501 to S508.

S501a: Receive sixth information from a terminal, where the sixth information includes at least one of the following information: path information of the terminal device, channel quality measurement information of the terminal device, and service information of the terminal device.

In this embodiment of this application, for ease of description, the terminal in the first network device is referred to as a first terminal, and a terminal in the second network device is referred to as a second terminal.

Optionally, the path information of the terminal may include historical path information of the terminal and/or predicted path information of the terminal; the channel quality measurement information of the terminal may include historical channel quality measurement information of the terminal and/or predicted channel quality measurement information of the terminal; and the service information of the terminal may include historical service information of the terminal and/or predicted service information of the terminal.

The predicted path information, the predicted channel quality measurement information, and the predicted channel quality measurement information of the terminal may be respectively obtained by the terminal through prediction based on the historical path information, the historical channel quality measurement information, and the historical service information of the terminal, or may be obtained by the first network device or the second network device through prediction based on the received historical path information, historical channel quality measurement information, and historical service information of the terminal.

In this embodiment, the first terminal may send the path information, the channel quality measurement information, and the service information of the first terminal to the first network device. Correspondingly, the first network device may receive the information sent by the first terminal. The second terminal may directly send path information, channel quality measurement information, and service information of the second terminal to the first network device. Correspondingly, the first network device may receive the information sent by the second terminal.

In this embodiment, optionally, the first network device may periodically indicate the first terminal and/or the second terminal to send the sixth information, and an execution period may be preconfigured.

S501b: Receive sixth information from the second network device, where the sixth information includes at least one of the following information: a CCO configuration currently applied to a cell in the second network device, a call drop rate of the second terminal, an access success rate of the second terminal, and an average access delay of the second terminal.

The call drop rate of the terminal is a call drop rate of the terminal in a cell or at a cell edge.

The CCO configuration of the second network device may include a CGI list of the cell in the second network device, a number (index) of a CCO configuration currently applied and/or to be applied to each cell, an SSB list of each cell, and a coverage status indicator of each SSB.

In this embodiment, the second network device may send, to the first network device, information such as the CCO configuration currently applied to the cell in the second network device, the call drop rate of the second terminal that is collected by the second network device, the access success rate of the second terminal, and the average access delay of the second terminal. Correspondingly, the first network device receives the information sent by the second network device.

Optionally, the sixth information sent by the second network device may further include the path information, the channel quality measurement information, and the service information of the second terminal. For example, the second terminal sends the path information, the channel quality measurement information, and the service information of the second terminal to the second network device, and the second network device forwards the path information, the channel quality measurement information, and the service information to the first network device.

It should be understood that information such as a CCO configuration currently applied to a cell in the first network device, a call drop rate of the first terminal that is collected by the first network device, an access success rate of the first terminal, and an average access delay of the first terminal may be directly obtained from a local server of the first network device.

Optionally, the second network device may further send, to the first network device, a requirement of the second network device or the cell in the second network device for precision or accuracy of information such as the access success rate of the second terminal, the average access delay of the second terminal, and the call drop rate of the second terminal in the cell/at the cell edge.

In this embodiment, optionally, the first network device may periodically indicate the second network device to send the sixth information, and an execution period may be preconfigured.

S502: Predict, in a first time period, first coverage and capacity of the first network device in a second time period, where the second time period is later than the first time period.

In this embodiment, the first coverage and capacity of the first network device in the second time period may be predicted in the first time period based on the obtained sixth information from the terminal.

For a specific implementation of S502, refer to S401. Details are not described herein again.

Optionally, the first coverage and capacity may be obtained through prediction based on an AI model, and the AI model may be a neural network model.

For example, data received in S501a and S501b may be input to the AI model, so that the first coverage and capacity can be obtained through prediction. For ease of description, the data received in S501a and S501b may be referred to as input data in a prediction process.

In this embodiment, when the first coverage and capacity of the first network device in the second time period are predicted, not only information about the first terminal is considered, but also information about the second terminal is considered. Therefore, the terminal in the second network device may be moved to the first network device for access. Therefore, a requirement for increasing coverage and capacity of the first network device is considered. This improves accuracy of predicting the first coverage and capacity.

S503: Determine a first CCO configuration of the first network device in the second time period based on the first coverage and capacity.

For a specific implementation of S503, refer to S402. Details are not described herein again.

S504: Send first information to the second network device, where the first information indicates the first CCO configuration.

In this embodiment, after the first CCO configuration of the first network device in the second time period is determined, the first information indicating the first CCO configuration may be sent to the second network device through the Xn interface or the NG interface, so that the second network device can adjust a CCO configuration of the second network device based on the first CCO configuration, to meet a coverage and capacity requirement of the second network device.

In a possible implementation, second information may be further sent to the second network device, to indicate that the first CCO configuration is determined based on the prediction, so that the second network device can determine properness of the prediction.

In this implementation, optionally, the second information may be an independent indication to explicitly indicate that the first CCO configuration is obtained based on prediction.

For example, the second information may be independent indication information such as text, a number, a symbol, or a graph that is agreed on with the second network device. After receiving the second information, the second network device may determine that the first CCO configuration is obtained based on prediction.

Optionally, the second information may be independent bit information, to indicate, to the second network device, that the first CCO configuration is obtained based on prediction.

In this implementation, optionally, a plurality of CCO configurations may be sent to implicitly indicate that the CCO configuration is obtained based on prediction. In an example, the first CCO configuration may include M CCO configurations, and M is a positive integer greater than 1. In this example, the second information is M.

In this implementation, optionally, the second information may be content included in the first information. For example, the first information may include at least one of the following content: a number of the first CCO configuration, a number of a cell to which the first CCO configuration is applied, the first CCO configuration, a valid time of the first CCO configuration, a reason for applying the first CCO configuration, an expected effect of applying the first CCO configuration, and prediction accuracy of the first CCO configuration.

Optionally, the first information may be sent to the second network device in a form of the following table.

| Number of the first CCO configuration | Cell number | First CCO configuration | Valid time | Reason for applying the first CCO configuration | Expected effect | Prediction accuracy |
|---|---|---|---|---|---|---|
| Parameter x | CGI y | Coverage status indicator of a cell, index identifier of an SSB, and coverage status indicator of each SSB | Start and end time | Terminal access at the cell edge, limited coverage, and the like | aa%+correspon -ding effect | bb% |

The number of the first CCO configuration may be a number x of one or more CCO configurations to be applied to each cell in the first network device, and may be a preset number of a CCO configuration. The number y of the cell to which the first CCO configuration is applied may be a CGI of the cell. The valid time of the first CCO configuration may be understood as a start time and an end time of executing the CCO configuration in the cell in the first network device. The reason for applying the first CCO configuration may include terminal access at the cell edge in the first network device, limited coverage or capacity that is of the first access network device or the cell in the first access network device in a current specific direction and that is caused due to reasons such as a limited azimuth angle and a limited horizontal or vertical width of an SSB of the cell, an excessively large quantity of terminals that are expected for access, and an increase in a service type/duration of the terminal, an adjustment to a horizontal or vertical width of an SSB in the cell, and the like. The expected effect may include information such as a predicted call drop rate or a predicted decrease percentage of a call drop rate of the terminal in the first network device, an access success rate or an increase percentage of a success rate, an average access delay or a decrease percentage or a specific time of an access delay, and a guaranteed success rate or an increase percentage of a success rate of a terminal service. The prediction accuracy may be historical accuracy of predicting a coverage and capacity requirement of the first access network device, or prediction accuracy that can be achieved by using currently obtained information about the first access network device and with reference to the AI model, may be a satisfaction percentage indicating that a CCO configuration that is historically determined based on a predicted coverage and capacity requirement can meet a requirement, or may be another unit quantity used to describe accuracy of a prediction result. This is not limited in this solution.

Optionally, the first information may further include information such as the input data in the prediction process, the AI model used in the prediction process, a number of the AI model, and a parameter of the AI model.

Optionally, the first information may further include a CCO configuration that is applied to a cell in the second network device, that is obtained by predicting a coverage and capacity requirement change of the second network device, and that is determined based on information obtained through prediction.

For example, second coverage and capacity of the second network device in the second time period are predicted in the first time period; a second CCO configuration of the second network device in the second time period is determined based on the second coverage and capacity; and then third information is sent to the second network device, where the third information indicates the second CCO configuration.

For a specific implementation of determining the second CCO configuration of the second network device in the second time period, refer to the implementation of determining the first CCO configuration of the first network device in the second time period in the foregoing embodiment. Details are not described herein again.

S505: Receive fourth information from the second network device, where the fourth information indicates feedback information that is from the second network device and that is based on the first CCO configuration.

After determining that the received first CCO configuration is determined based on prediction, the second network device may reply in the following manner based on the received information such as the change reason, the expected effect, the prediction accuracy, and the input data in the prediction process.

Manner 1: The second network device accepts application of the first CCO configuration to the first network device in the second time period, and sends the fourth information to the first network device, where the fourth information indicates a CCO configuration determined by the second network device for the second network device.

In this manner, in an example, the second network device may send a bit to the first network device to indicate that application of the first CCO configuration to the first network device in the second time period is accepted, and may send an adjustment result to the first network device after determining the CCO configuration of the second network device based on the first CCO configuration and the coverage and capacity of the second network device. For the adjustment result, refer to the table information in S504.

Optionally, if the first CCO configuration includes a plurality of CCO configurations, the second network device may accept application of only several CCO configurations in the first CCO configuration to the first network device in the second time period, and provide corresponding feedback.

Optionally, the coverage and capacity of the second network device may be obtained by the first network device through prediction and sent to the second network device, or may be obtained by the second network device through prediction.

Optionally, the CCO configuration determined by the second network device for the second network device may be the second CCO configuration to be applied to the second network device in the second time period, may be a CCO configuration in another time period including the second time period, or may be a CCO configuration in some time periods in the second time period. This is not limited in this application.

Optionally, the second CCO configuration to be applied to the second network device in the second time period may be determined by the first network device for the second network device through prediction.

In a possible implementation, the CCO configuration determined by the second network device for the second network device may be one CCO configuration, or may be a plurality of CCO configurations. In addition, a quantity of CCO configurations determined by the second network device is irrelevant to a quantity of CCO configurations in the first CCO configuration.

Optionally, if each of the first CCO configuration and the CCO configuration of the second network device is a plurality of configurations, a relationship between both a valid time when the first CCO configuration is applied to the cell in the first network device and the quantity of CCO configurations in the first CCO configuration and both a valid time when the CCO configuration is applied to the cell in the second network device and the quantity of CCO configurations may be one-to-one, one-to-many, or many-to-one.

In an example, that one CCO configuration is applied to the cell in the first network device in one time period may correspond to that a plurality of CCO configurations are applied to the cell in the second network device in the same time period, or may correspond to that a plurality of CCO configurations are applied to the cell in the second network device in a plurality of different time periods.

For example, a cell Y in the first network device uses a configuration 1 in the first CCO configuration in a time period 1, and a cell Z in the second network device may use a configuration 1 and a configuration 2 in the CCO configuration in the time period 1, or a cell Z in the second network device may use a configuration 1 in the CCO configuration in a time period 2, where the time period 2 may include the time period 1.

Optionally, when sending the fourth information to the first network device, the second network device may implicitly or explicitly indicate whether the adjustment result fed back by the second network device is obtained based on prediction.

Manner 2: The second network device does not accept application of the first CCO configuration to the first network device in the second time period, and sends the fourth information to the first network device, where the fourth information is used to request to re-determine a CCO configuration.

In this manner, the second network device considers that precision and accuracy of the first CCO configuration and/or the second CCO configuration determined by the first network device through prediction do not meet a requirement of the second network device. Therefore, the second network device may request the first network device to re-determine the first CCO configuration and/or the second CCO configuration.

Optionally, if the first CCO configuration and/or the second CCO configuration include/includes a plurality of CCO configurations, the second network device may request the first network device to re-determine only one or more CCO configurations that do not meet a requirement of the second network device in the first CCO configuration and/or the second CCO configuration.

In a possible implementation, the second network device may send, to the first network device, indication information for re-inference, a reason for re-inference, precision, accuracy, and a coverage and capacity optimization requirement that the second network device expects the first CCO configuration and/or the second CCO configuration to meet, an expected time for completing re-inference by the first network device, or other data that helps the first network device perform prediction and inference.

In another possible implementation, the second network device may further perform prediction based on received information such as input data used by the first network device in a process of determining the first CCO configuration and/or the second CCO configuration through prediction, a used AI model or a number of an AI model, and a parameter of the AI model.

In this implementation, if precision and accuracy of the first CCO configuration and/or the second CCO configuration obtained by the second network device through prediction are higher than precision and accuracy of a result obtained by the first network device through prediction, and an effect is better, the first CCO configuration and/or the second CCO configuration determined through prediction may be sent to the first network device.

S506: The first network device and the second network device determine a final CCO configuration.

In this embodiment, the first network device interacts with the second network device based on the fourth information sent by the second network device, to determine the CCO configuration to be finally applied to the first network device and/or the second network device. Specifically, the following manners are included.

For the manner 1 in S505, the first network device and the second network device reach an agreement, and the first network device and the second network device separately make a coverage and capacity adjustment based on the determined CCO configuration.

For the manner 2 in S505, in a possible implementation, the first network device re-determines the first CCO configuration and/or the second CCO configuration through prediction based on information such as the indication information for re-inference sent by the second network device, the reason for re-inference, the precision, the accuracy, and the coverage and capacity optimization requirement expected by the second network device, the expected time for completing re-inference by the first network device, or the other data that helps the first network device perform prediction and inference, and sends a result obtained through re-prediction to the second network device until the first network device and the second network device reach an agreement.

For the manner 2 in S505, in another possible implementation, optionally, if the first network device accepts the first CCO configuration and/or the second CCO configuration determined by the second network device through prediction, the first network device and the second network device reach an agreement; or the first network device re-determines the first CCO configuration and/or the second CCO configuration through prediction, and sends the first CCO configuration and/or the second CCO configuration to the second network device until the first network device and the second network device reach an agreement; or the first network device indicates, to the second network device, that a first result obtained by the first network device through prediction is used. The first result is the first CCO configuration and/or the second CCO configuration obtained by the first network device through prediction in S503.

S507a: Receive seventh information from the terminal, where the seventh information includes at least one of the following information after the CCO configuration is applied to the first network device in the second time period: path information of the terminal, channel quality measurement information of the terminal, and service information of the terminal.

S507b: Receive seventh information from the second network device, where the seventh information includes at least one of the following information after the CCO configuration is applied to the first network device in the second time period: a CCO configuration currently applied to the cell in the second network device, a call drop rate of the terminal, an access success rate of the terminal, and an average access delay of the terminal.

In this embodiment, for specific implementations of S507a and S507b, refer to S501a and S501b. Details are not described herein again. However, the information obtained in S507a and S507b is information after the CCO configuration is applied to the first network device in the second time period.

Optionally, the first network device may collect the foregoing data based on a valid time period in which the CCO configuration is applied to the cell in the first network device or the second network device. For example, the first network device may request the second network device to collect data such as an access success rate and an average access delay of the terminal in a cell y in the second network device when a CCO configuration x is applied to the cell in a time period 1.

Optionally, the first network device may periodically indicate the first terminal, the second terminal, or the second network device to send the seventh information, and an execution period may be preconfigured. For example, the first network device indicates a specific threshold to the second network device. If the CCO configuration x is applied to the cell y in the second network device in the time period 1, and the access success rate in the cell is less than the threshold, the second network device sends the seventh information to the first network device.

S508: Optimize the neural network model based on the seventh information.

In this embodiment, if actual coverage and capacity requirement change data of the cell in the first network device or the cell in the second network device in the seventh information received by the first network device is inconsistent with data obtained through prediction, the first network device may train and optimize the neural network model based on the actual data.

A specific model training and optimization process is not limited in this solution.

In this embodiment, the first network device may obtain information about the first terminal, the second terminal, and the second network device in the first time period, and use the information as an input to the AI model, to obtain a coverage and capacity requirement change of the first network device or the second network device in the second time period through prediction, and determine a proper first CCO configuration and/or second CCO configuration. This avoids a problem of a delay in performing CCO based on current coverage and capacity only after a base station determines that a coverage and capacity problem occurs. An adjustment result and reason with richer content are sent to the second network device, so that the second network device can make a proper CCO adjustment based on the first CCO configuration of the first network device, and jointly implement, through interaction with the second network device, a CCO adjustment solution that can be used for a future wireless environment change. In addition, the AI model may be optimized based on the actual coverage and capacity requirement change data obtained based on feedback.

In addition, in this technical solution, the first network device and the second network device may exchange a plurality of CCO configurations and a corresponding valid time at a time, thereby reducing a quantity of interaction times and lowering signaling overheads.

### Embodiment 3

Embodiment 3 of this application provides a coverage and capacity optimization method. The method may be performed by an AI module. The AI module may be integrated into an existing module of a third network device, or may be independently disposed in a third network device. Alternatively, the AI module may be independently used as a third network device.

A difference from Embodiment 2 lies in that in Embodiment 2, the AI module is disposed in the first network device, while in Embodiment 3, the AI module is disposed in the third network device, and the third network device performs a process of determining a CCO configuration through AI prediction.

In an example, the third network device may be an OAM, the first network device may be gNB1, a second network device may be gNB2, and gNB1 and gNB2 may be adjacent devices. Interaction may be performed between gNB1 gNB2 through an Xn interface, or may be performed through a core network NG interface. Modules for interaction between gNB1 and gNB2 may be located in gNB1, gNB1-CU, gNB2, and gNB2-CU. An interaction interface between the OAM and the gNB is usually implemented through internal agreement between a device vendor and an operator. This is not limited herein.

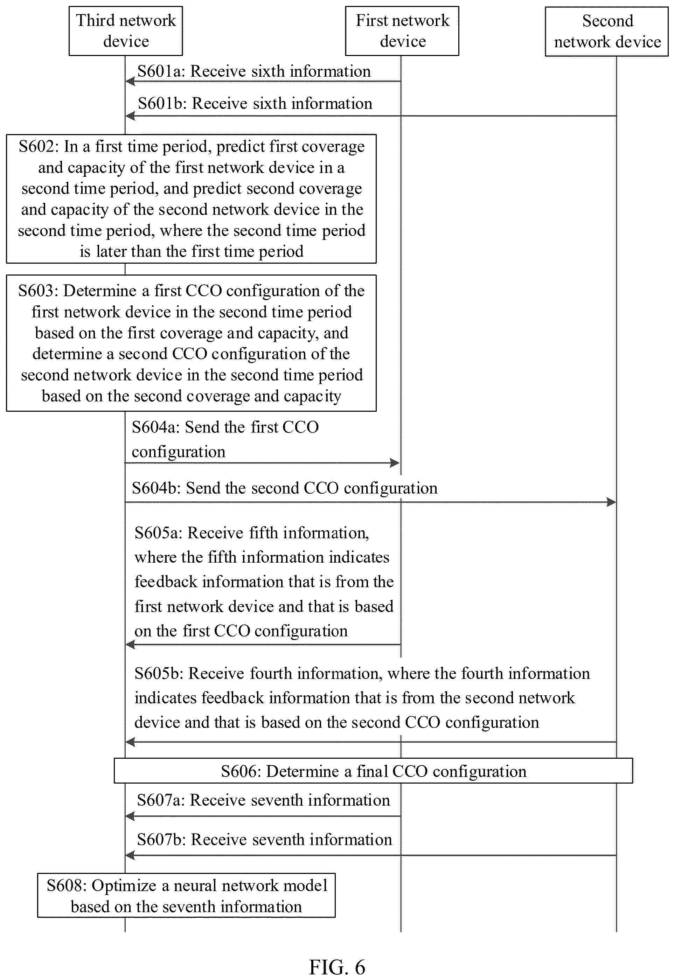

As shown in FIG. 6, a schematic flowchart of a coverage and capacity optimization method is provided. The method includes at least S601 to S608.

S601a: Receive sixth information from the first network device, where the sixth information includes at least one of the following information: path information of a first terminal, channel quality measurement information of the first terminal, service information of the first terminal, a CCO configuration currently applied to a cell in the first network device, a call drop rate of the first terminal, an access success rate of the first terminal, and an average access delay of the first terminal.

Optionally, the path information of the first terminal may include historical path information of the first terminal and/or predicted path information of the first terminal; the channel quality measurement information of the first terminal may include historical channel quality measurement information of the first terminal and/or predicted channel quality measurement information of the first terminal; and the service information of the first terminal may include historical service information of the first terminal and/or predicted service information of the first terminal.

The predicted path information, the first predicted channel quality measurement information, and the first predicted service information of the first terminal may be respectively obtained by the first terminal through prediction based on the historical path information, the historical channel quality measurement information, and the historical service information of the first terminal, and sent to the first network device, or may be obtained by the first network device through prediction based on the received historical path information, historical channel quality measurement information, and historical service information of the first terminal.

In this embodiment, the first terminal may send the path information, the channel quality measurement information, and the service information of the first terminal to the first network device, and the first network device forwards the path information, the channel quality measurement information, and the service information to the third network device. Correspondingly, the third network device may receive the information sent by the first network device.

The first network device may send, to the third network device, information such as the CCO configuration currently applied to the cell in the first network device, the call drop rate of the first terminal that is collected by the first network device, the access success rate of the first terminal, and the average access delay of the first terminal. Correspondingly, the third network device receives the information sent by the first network device.

Optionally, the third network device may periodically indicate the first network device to send the sixth information, and an execution period may be preconfigured.

S601b: Receive sixth information from the second network device, where the sixth information includes at least one of the following information: path information of a second terminal, channel quality measurement information of the second terminal, service information of the second terminal, a CCO configuration currently applied to a cell in the second network device, a call drop rate of the second terminal, an access success rate of the second terminal, and an average access delay of the second terminal.

For a specific implementation of S601b, refer to S601a. Details are not described herein again.

In a possible implementation, if there is no direct interaction interface between the third network device and the second network device, the third network device may indicate the first network device to obtain related data of the second network device from the second network device through the Xn interface or the NG interface. When requesting data from the second network device, the first network device needs to indicate, to the second network device, that the data request is from the third network device, and the data request is used to determine CCO configuration information through prediction.

For ease of description, the data received in S601a and S601b may be referred to as input data in a prediction process.

S602: In a first time period, predict first coverage and capacity of the first network device in a second time period, and predict second coverage and capacity of the second network device in the second time period, where the second time period is later than the first time period.

In this embodiment, the first coverage and capacity of the first network device in the second time period may be predicted in the first time period based on the obtained sixth information from the first network device, and the second coverage and capacity of the second network device in the second time period may be predicted in the first time period based on the obtained sixth information from the second network device.

For a specific implementation of S602, refer to S502. Details are not described herein again.

S603: Determine a first CCO configuration of the first network device in the second time period based on the first coverage and capacity, and determine a second CCO configuration of the second network device in the second time period based on the second coverage and capacity.

For a specific implementation of S603, refer to S402. Details are not described herein again.

S604a: Send the first CCO configuration to the first network device.

In this embodiment, after the first CCO configuration of the first network device in the second time period is determined, the first CCO configuration may be sent to the first network device.

Optionally, the third network device may further send other information to the first network device, to implicitly or explicitly indicate that the first CCO configuration is determined based on prediction, so that the first network device can determine properness of the prediction, and adjust a CCO configuration of the first network device based on the first CCO configuration.

S604b: Send the second CCO configuration to the second network device.

In this embodiment, after the second CCO configuration of the second network device in the second time period is determined, the second CCO configuration may be sent to the second network device.

Optionally, the third network device may further send other information to the second network device, to implicitly or explicitly indicate that the second CCO configuration is determined based on prediction, so that the second network device can determine properness of the prediction, and adjust a CCO configuration of the second network device based on the second CCO configuration.

In some possible implementations, the third network device may respectively send CCO configurations determined through AI prediction to network devices. For example, the first CCO configuration may be sent only to the first network device, and the second CCO configuration may be sent only to the second network device. Alternatively, a CCO configuration determined through AI prediction is forwarded to another network device through a network device. For example, both the first CCO configuration and the second CCO configuration may be sent to the first network device, and the second CCO configuration is forwarded by the first network device to the second network device. Alternatively, all CCO configurations are sent to each network device. Alternatively, only a result related to a network device is sent to the network device. For example, when the first CCO configuration of the first network device is determined through prediction, because the first network device is adjacent to the second network device, both the first CCO configuration and the second CCO configuration may be sent to the first network device.

For a specific implementation of a message type or message content for sending the CCO configuration in S604a and S604b, refer to S504. Details are not described herein again.

S605a: Receive fifth information from the first network device, where the fifth information indicates feedback information that is from the first network device and that is based on the first CCO configuration.

In this embodiment, after determining that the received first CCO configuration is determined based on prediction, the first network device may send the feedback information to the third network device based on received information such as a change reason, an expected effect, prediction accuracy, and the input data in the prediction process.

Optionally, the fifth information may include a CCO configuration determined by the first network device for the first network device.

Optionally, in an example, if the first network device further receives the second CCO configuration sent by the third network device, the fifth information may further include feedback information that is from the first network device and that is based on the second CCO configuration.

S605b: Receive fourth information from the second network device, where the fourth information indicates feedback information that is from the second network device and that is based on the second CCO configuration.

In this embodiment, after determining that the received second CCO configuration is determined based on prediction, the second network device may send the feedback information to the third network device based on received information such as a change reason, an expected effect, prediction accuracy, and the input data in the prediction process.

Optionally, in an example, if the second network device further receives the first CCO configuration sent by the third network device, the fourth information may further include feedback information that is from the second network device and that is based on the first CCO configuration.

For specific implementations of S605a and S605b, refer to S505. Details are not described herein again.

Optionally, the second network device may further send, to the first network device, the fourth information that needs to be sent to the third network device, and the first network device forwards the fourth information to the third network device.

S606: The third network device determines a final CCO configuration with each of the first network device and the second network device.

In this embodiment, the third network device interacts, based on the fifth information sent by the first network device, with the first network device to determine the CCO configuration to be finally applied to the first network device in the second time period, and the third network device interacts, based on the fourth information sent by the second network device, with the second network device to determine the CCO configuration to be finally applied to the second network device in the second time period.

For a specific implementation of S606, refer to S506. Details are not described herein again.

Optionally, the CCO configuration to be finally applied to the second network device in the second time period may be determined through interaction between the first network device and the third network device, and the first network device sends an interaction result to the second network device.

S607a: Receive seventh information from the first network device, where the seventh information includes at least one of the following information after the CCO configuration is applied to the first network device in the second time period: path information of the first terminal, channel quality measurement information of the first terminal, service information of the first terminal, a CCO configuration currently applied to the cell in the first network device, a call drop rate of the first terminal, an access success rate of the first terminal, and an average access delay of the first terminal.

In this embodiment, for a specific implementation of S607a, refer to S601a. Details are not described herein again. However, the information obtained in S607a is information after the CCO configuration is applied to the first network device in the second time period.

S607b: Receive seventh information from the second network device, where the seventh information includes at least one of the following information after the CCO configuration is applied to the first network device in the second time period: path information of the second terminal, channel quality measurement information of the second terminal, service information of the second terminal, a CCO configuration currently applied to the cell in the second network device, a call drop rate of the second terminal, an access success rate of the second terminal, and an average access delay of the second terminal.

For a specific implementation of S607b, refer to S601b. Details are not described herein again. However, the information obtained in S607b is related information of the second network device after the CCO configuration is applied to the first network device in the second time period.

S608: Optimize a neural network model based on the seventh information.

In this embodiment, if actual coverage and capacity requirement change data of the cell in the first network device or the cell in the second network device in the seventh information received by the third network device is inconsistent with data obtained through prediction, the third network device may train and optimize an AI model of the third network device based on the actual data.

For a specific implementation of S608, refer to S508. Details are not described herein again.

In this embodiment, the third network device may obtain related information of the first network device and the second network device at a first moment, and use the related information as input data of the AI model, to obtain coverage and capacity of the first network device and the second network device in the second time period through prediction, and determine a proper CCO configuration. This avoids a problem of a delay in performing CCO based on current coverage and capacity only after a base station determines that a coverage and capacity problem occurs, and improves communication quality of the terminal device in the first network device. An adjustment result and reason with richer content are separately sent to the first network device and the second network device, so that the first network device and the second network device can make a proper CCO adjustment based on the CCO configuration determined through prediction, and jointly implement, through interaction with the third network device, a CCO adjustment solution that can be used for a future wireless environment change.

### Embodiment 4

Embodiment 4 of this application provides a coverage and capacity optimization method, applied to a CU-DU separated network architecture. The method may be performed by an AI module. The AI module may be integrated into CU1 and/or DU1 in a first network device, or may be independently disposed in CU1 and/or DU1 in a first network device. CU1 and/or DU1 in the first network device perform/performs a process of determining a CCO configuration through AI prediction.

The first network device may be gNB1, and gNB1 may include CU1 and DU1. A second network device may be gNB2, and gNB2 may include CU2 and DU2. Interaction is performed between CU1 and DU1 through an F1 interface, and interaction is performed between CU1 and CU2 through an Xn interface, or may be performed through a core network NG interface. Herein, gNB1 and gNB2 may be adjacent devices.

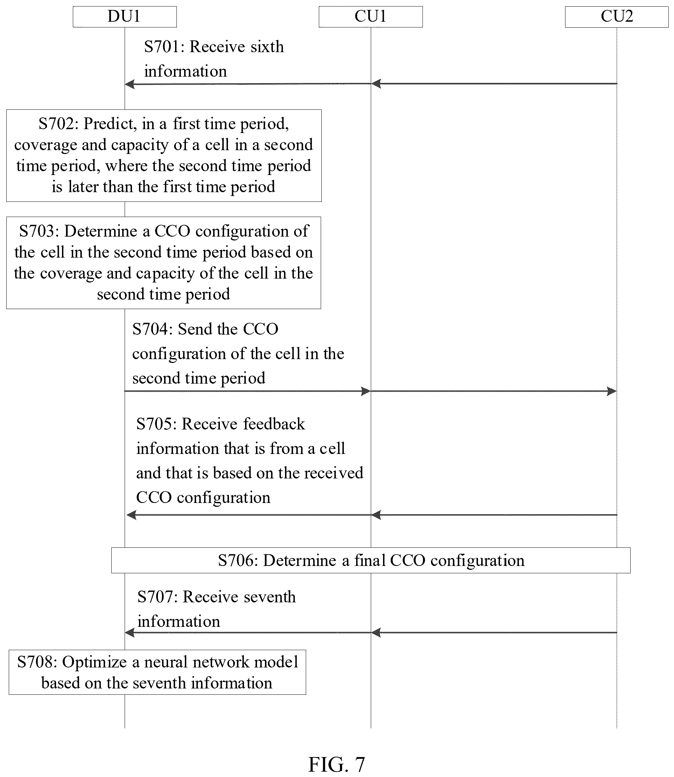

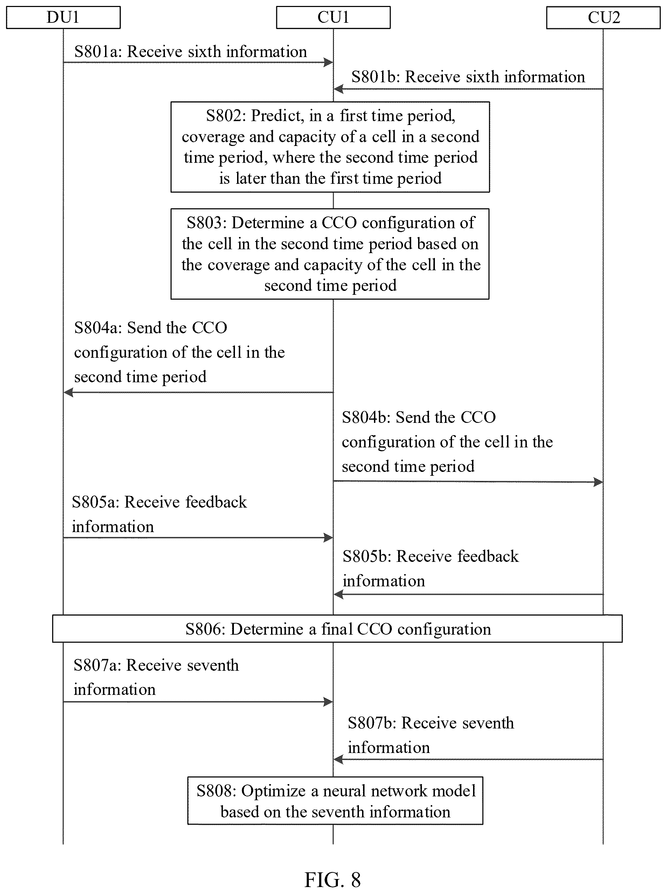

In Embodiment 4, in a method shown in FIG. 7, DU1 performs a process of determining a CCO configuration through AI prediction, and in a method shown in FIG. 8, CU1 performs a process of determining a CCO configuration through AI prediction.

FIG. 7 is a schematic flowchart of a coverage and capacity optimization method according to Embodiment 4 of this application. The method may include S701 to S708.

S701: Receive sixth information from CU1, where the sixth information includes at least one of the following information: path information of a terminal, channel quality measurement information of the terminal, service information of the terminal, a CCO configuration currently applied to a cell in the first network device, a CCO configuration currently applied to a cell in the second network device, a call drop rate of the terminal, an access success rate of the terminal, and an average access delay of the terminal.

In this embodiment, for related descriptions of the terminal, refer to S501. Details are not described herein again.

In this embodiment, DU1 may directly obtain path information of a first terminal, channel quality measurement information of the first terminal, and service information of the first terminal from CU1. Information such as path information of a second terminal, channel quality measurement information of the second terminal, service information of the second terminal, the CCO configuration currently applied to the cell in the second network device, a call drop rate of the second terminal that is collected by the second network device, an access success rate of the second terminal, and an average access delay of the second terminal may be sent by CU2 to CU1, and forwarded by CU1 to DU1. Correspondingly, DU1 receives the sixth information sent by CU1.

Optionally, information such as the CCO configuration currently applied to the cell in the first network device, a call drop rate of the first terminal that is collected by the first network device, an access success rate of the first terminal, and an average access delay of the first terminal may be directly obtained from a local server of DU1.

Optionally, DU1 may obtain, through CU1, a CCO configuration currently applied to another DU cell in CU1.

Optionally, if there are a plurality of CUs in the first network device, and each CU corresponds to a plurality of DUs, the CCO configuration currently applied to the cell in the first network device includes a CCO configuration currently applied to each DU cell corresponding to each CU. In this case, DU1 may obtain, through CU1, the CCO configuration currently applied to each DU cell corresponding to each CU.

S702: Predict, in a first time period, coverage and capacity of a cell in a second time period, where the second time period is later than the first time period.

In this embodiment, for a specific implementation of predicting a coverage and capacity requirement, refer to S502. Details are not described herein again.

In this embodiment, DU1 may predict a coverage and capacity requirement of a DU1 cell in the second time period.

Optionally, DU1 may further predict a coverage and capacity requirement of another DU cell in CU1 in the second time period; and DU1 may further predict a coverage and capacity requirement of a cell adjacent to the DU1 cell in the second time period. The cell adjacent to the DU1 cell may be a cell in the first network device, or may be a cell in the second network device.

S703: Determine a CCO configuration of the cell in the second time period based on the coverage and capacity of the cell in the second time period.

In this embodiment, for a specific implementation of determining a CCO configuration of each cell in the second time period based on a coverage and capacity requirement that is of each cell in the second time period and that is obtained through prediction, refer to S402. Details are not described herein again.

S704: Send the CCO configuration of the cell in the second time period.

In this embodiment, DU1 may send a CCO configuration that is of the DU1 cell and that is determined through prediction to CU1 through the F1 interface.

Optionally, DU1 may further send a CCO configuration that is of the another DU cell in CU1 and that is determined through prediction to CU1 through the F1 interface; and DU1 may further send a CCO configuration that is of the cell adjacent to the DU1 cell and that is determined through prediction to CU1 through the F1 interface.

CU1 may send the received CCO configuration of each cell to another DU cell in CU1 through the F1 interface, or send the received CCO configuration to CU2 through the Xn interface or the NG interface.

Optionally, in a process in which DU1 sends the CCO configuration, it may be implicitly or explicitly indicated that the CCO configuration is determined based on AI prediction.

In this embodiment, for a specific implementation of a message type or message content for sending the CCO configuration by DU1, refer to S504. Details are not described herein again.

S705: Receive feedback information that is from a cell and the feedback information is based on the received CCO configuration.

In this embodiment, after DU1 sends the CCO configuration that is of the DU1 cell and that is determined through prediction or the CCO configuration of the another DU cell to CU1, CU1 may provide feedback to DU1 in the following manner.

Optionally, before providing feedback to DU1, CU1 may receive feedback information of the CCO configuration from the another cell in CU1 and/or CU2.

Manner 1: CU1 accepts the CCO configuration to be applied to the DU1 cell in the second time period.

In this manner, in an example, CU1 may send a bit to DU1 to indicate that the CCO configuration that is applied to the DU1 cell in the second time period and that is sent by DU1 through the F1 interface is accepted, determine a CCO configuration of another DU cell based on a coverage and capacity requirement of CU1 and feedback information from another device (for example, the another DU in CU1 or CU2), and send the CCO configuration of the another DU cell to each DU cell. CU1 may further feed back the CCO configuration of the another DU cell to DU1. For details of content and a format for sending, refer to S504.

For a specific implementation of this manner, refer to the manner 1 in S505. Details are not described herein again.

Manner 2: CU1 does not accept the CCO configuration to be applied to the DU1 cell in the second time period, and sends information for requesting to re-determine a CCO configuration to DU1.

In this manner, CU1 considers that precision and accuracy of the CCO configuration that is of the DU1 cell and that is determined by DU1 through prediction or the CCO configuration that is of the another DU cell in CU1 or a DU cell in CU2 and that is determined by DU1 through prediction do not meet a requirement of CU1. Therefore, CU1 requests DU1 to re-determine a corresponding CCO configuration through prediction.

For a specific implementation of this manner, refer to the manner 2 in S505. Details are not described herein again.

S706: DU1, CU1, and CU2 determine a final CCO configuration.

For a specific implementation of S706, refer to S506. Details are not described herein again.

Optionally, the CCO configuration of the another DU cell in CU1 may be determined through interaction between DU1 and CU1, and the CCO configuration of the cell in CU2 may be determined through interaction between CU2 and CU1. This is not limited in this application.

S707: Receive seventh information from CU1, where the seventh information includes at least one of the following information after the CCO configuration is applied to the DU1 cell in the second time period: path information of the terminal, channel quality measurement information of the terminal, service information of the terminal, a CCO configuration currently applied to the cell in the first network device, a CCO configuration currently applied to the cell in the second network device, a call drop rate of the terminal, an access success rate of the terminal, and an average access delay of the terminal.

For a specific implementation of S707, refer to S701. Details are not described herein again. However, the information obtained in S707 is related information after the CCO configuration is applied to the DU1 cell in the second time period.

S708: Optimize a neural network model based on the seventh information.

In this embodiment, if actual coverage and capacity requirement change data of the DU1 cell or the another DU cell in the seventh information received by DU1 is inconsistent with data obtained through prediction, DU1 may train and optimize the neural network model of DU1 based on the actual data.

For a specific implementation of S708, refer to S508. Details are not described herein again.

FIG. 8 is a schematic flowchart of another coverage and capacity optimization method according to Embodiment 4 of this application. The method may include S801 to S808.

S801a: Receive sixth information from DU1, where the sixth information includes at least one of the following information: a CCO configuration currently applied to a cell in the first network device, a call drop rate of a first terminal that is collected by the first network device, an access success rate of the first terminal, and an average access delay of the first terminal.

S801b: Receive sixth information from CU2, where the sixth information includes at least one of the following information: path information of a second terminal, channel quality measurement information of the second terminal, service information of the second terminal, a CCO configuration currently applied to a cell in the second network device, a call drop rate of the second terminal that is collected by the second network device, an access success rate of the second terminal, and an average access delay of the second terminal.

In this embodiment, optionally, information such as path information of the first terminal, channel quality measurement information of the first terminal, and service information of the first terminal may be directly obtained from a local server of CU1.

In this embodiment, for related descriptions of the terminal, refer to S501. Details are not described herein again.

S802: Predict, in a first time period, coverage and capacity of a cell in a second time period, where the second time period is later than the first time period.

In this embodiment, for a specific implementation of predicting a coverage and capacity requirement, refer to S502. Details are not described herein again.

In this embodiment, CU1 may predict a coverage and capacity requirement of a DU1 cell in the second time period.

Optionally, CU1 may further predict a coverage and capacity requirement of another DU cell in CU1 in the second time period; and CU1 may further predict a coverage and capacity requirement of a DU cell adjacent to each DU cell in CU1 in the second time period.

S803: Determine a CCO configuration of the cell in the second time period based on the coverage and capacity of the cell in the second time period.

In this embodiment, for a specific implementation of determining a CCO configuration of each cell in the second time period based on a coverage and capacity requirement that is of each cell in the second time period and that is obtained through prediction, refer to S402. Details are not described herein again.

S804a: Send the CCO configuration of the cell in the second time period to DU1.

In this embodiment, CU1 may send a CCO configuration that is of the DU1 cell and that is determined through prediction to DU1 through the F1 interface.

Optionally, CU1 may further send a CCO configuration that is of the another DU cell in CU1 and that is determined through prediction to DU1 through the F1 interface; and CU1 may further send a CCO configuration that is of the DU cell adjacent to each DU cell in CU1 and that is determined through prediction to DU1 through the F1 interface.

S804b: Send the CCO configuration of the cell in the second time period to CU2.

In this embodiment, CU1 may send the CCO configuration that is of each cell and that is determined through prediction to CU2 through the Xn interface or the NG interface.

In this embodiment, optionally, in a process in which CU1 sends the CCO configuration, it may be implicitly or explicitly indicated that the CCO configuration is determined based on AI prediction.

In this embodiment, for a specific implementation of a message type or message content for sending the CCO configuration by CU1, refer to S504. Details are not described herein again.

S805a: Receive feedback information from DU1.

In this embodiment, after CU1 sends the CCO configuration that is of the DU1 cell and that is determined through prediction to DU1, DU1 may provide feedback to CU1.

S805b: Receive feedback information from CU2.

In this embodiment, after CU1 sends the CCO configuration determined through prediction to CU2, CU2 may provide feedback to CU1.

For specific implementations of S805a and S805b, refer to S505. Details are not described herein again.

S806: CU1, DU1, and CU2 determine a final CCO configuration.

For a specific implementation of S806, refer to S506. Details are not described herein again.

Optionally, the CCO configuration of the DU1 cell may be determined through interaction between DU1 and CU1, the CCO configuration of the another DU cell in CU1 may be determined through interaction between DU1 and CU1, or may be determined through interaction between CU1 and the CU2, and a CCO configuration of a cell in CU2 may be determined through interaction between CU2 and CU1. This is not limited in this application.

S807a: Receive seventh information from DU1, where the seventh information includes at least one of the following information after the CCO configuration is applied to the DU1 cell in the second time period: a CCO configuration currently applied to the cell in the first network device, a call drop rate of the first terminal that is collected by the first network device, an access success rate of the first terminal, and an average access delay of the first terminal.

S807b: Receive seventh information from CU2, where the seventh information includes at least one of the following information after the CCO configuration is applied to the DU1 cell in the second time period: path information of the second terminal, channel quality measurement information of the second terminal, service information of the second terminal, a CCO configuration currently applied to the cell in the second network device, a call drop rate of the second terminal that is collected by the second network device, an access success rate of the second terminal, and an average access delay of the second terminal.

For specific implementations of S807a and S807b, refer to S801a and S801b. Details are not described herein again. However, the information obtained in S807a and S807b is related information after the CCO configuration is applied to the DU1 cell in the second time period.

S808: Optimize a neural network model based on the seventh information.

In this embodiment, if actual coverage and capacity requirement change data of the DU1 cell or the another DU cell in the seventh information received by CU1 is inconsistent with data obtained through prediction, CU1 may train and optimize the neural network model of CU1 based on the actual data.

For a specific implementation of S808, refer to S508. Details are not described herein again.

In a possible implementation, if each of CU1 and DU1 in Embodiment 4 has a capability of determining a CCO configuration through AI prediction, each of CU1 and DU1 may independently perform the foregoing method.

In this implementation, when the foregoing method is performed, CU1 and DU1 may send information such as respective CCO configurations determined through prediction, related prediction input data, AI models, and parameters of the AI models to each other, and then determine a final CCO configuration by using higher accuracy and higher accuracy as determining criteria.

In this embodiment, DU1 or CU1 may use data obtained at a first moment as an input to the AI model, to predict a future coverage and capacity change and requirement of each DU cell, so as to determine a proper CCO configuration. This avoids a problem of delayed CCO optimization in the conventional technology. In addition, a CCO adjustment solution that can be used for a future wireless environment change is jointly implemented through interaction between DU1 and CU1. In addition, the model can be optimized based on the actual coverage and capacity requirement change data that is fed back, to gradually improve prediction accuracy. In addition, CU1 and DU1 may exchange a plurality of CCO configurations and a corresponding valid time at a time, thereby improving interaction efficiency and lowering signaling overheads.

It should be noted that the technical solutions provided in this application are not limited to an NR network or the communication scenario between devices shown in the foregoing embodiments, and may be further extended and applied to a communication requirement scenario in which local data of a gNB is transmitted to a terminal through a user plane.

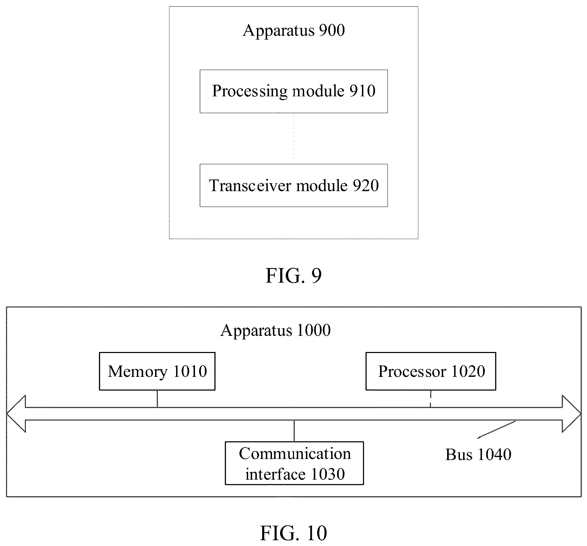

FIG. 9 is a diagram of a structure of a coverage and capacity optimization apparatus according to an embodiment of this application. The apparatus 900 shown in FIG. 9 may be configured to implement the steps performed by the first network device, the third network device, the second network device, or the terminal device in FIG. 4 to FIG. 8. As shown in FIG. 9, the apparatus 900 in this embodiment may include a processing module 910 and a transceiver module 920.

When the apparatus 900 is configured to implement the method implemented by the first network device in FIG. 4, the processing module 910 may be configured to implement S401 and S402, and the transceiver module 920 may be configured to implement the operation performed by the first network device in S403.

When the apparatus 900 is configured to implement the method implemented by the second network device in FIG. 4, the transceiver module 920 may be configured to implement the operation performed by the second network device in S403.

When the apparatus 900 is configured to implement the method implemented by the first network device in FIG. 5, the processing module 910 may be configured to implement S502, S503, and S508, the processing module 910 may be further configured to implement the operation performed by the first network device in S506, and the transceiver module 920 may be configured to implement the operations performed by the first network device in S501a, S501b, S504, S505, S507a, and S507b.

When the apparatus 900 is configured to implement the method implemented by the second network device in FIG. 5, the processing module 910 may be configured to implement the operation performed by the second network device in S506, and the transceiver module 920 may be configured to implement the operations performed by the second network device in S501b, S504, S505, and S507b.

When the apparatus 900 is configured to implement the method implemented by the terminal device in FIG. 5, the transceiver module 920 may be configured to implement the operations performed by the terminal device in S501a and S507a.

When the apparatus 900 is configured to implement the method implemented by the third network device in FIG. 6, the processing module 910 may be configured to implement S602, S603, and S608, the processing module 910 may be further configured to implement the operation performed by the third network device in S606, and the transceiver module 920 may be configured to implement the operations performed by the third network device in S601a, S601b, S604a, S604b, S605a, S605b, S607a, and S607b.

When the apparatus 900 is configured to implement the method implemented by the first network device in FIG. 6, the processing module 910 may be configured to implement the operation performed by the first network device in S606, and the transceiver module 920 may be configured to implement the operations performed by the first network device in S601a, S604a, S605a, and S607a.

When the apparatus 900 is configured to implement the method implemented by the second network device in FIG. 6, the processing module 910 may be configured to implement the operation performed by the second network device in S606, and the transceiver module 920 may be configured to implement the operations performed by the second network device in S601b, S604b, S605b, and S607b.

When the apparatus 900 is configured to implement the method implemented by DU1 in the first network device in FIG. 7, the processing module 910 may be configured to implement S702, S703, and S708, the processing module 910 may be further configured to implement the operation performed by DU1 in S706, and the transceiver module 920 may be configured to implement the operations performed by DUI in S701, S704, S705, and S707.

When the apparatus 900 is configured to implement the method implemented by CU1 in the first network device in FIG. 7, the processing module 910 may be configured to implement the operation performed by CU1 in S706, and the transceiver module 920 may be configured to implement the operations performed by CUI in S701, S704, S705, and S707.

When the apparatus 900 is configured to implement the method implemented by CU2 in the second network device in FIG. 7, the processing module 910 may be configured to implement the operation performed by CU2 in S706, and the transceiver module 920 may be configured to implement the operations performed by CU2 in S701, S704, S705, and S707.

When the apparatus 900 is configured to implement the method implemented by CU1 in the first network device in FIG. 8, the processing module 910 may be configured to implement S802, S803, and S808, the processing module 910 may be further configured to implement the operation performed by CU1 in S806, and the transceiver module 920 may be configured to implement the operations performed by CU1 in S801a, S801b, S804a, S804b, S805a, S805b, S807a, and S807b.

When the apparatus 900 is configured to implement the method implemented by DU1 in the first network device in FIG. 8, the processing module 910 may be configured to implement the operation performed by DU1 in S806, and the transceiver module 920 may be configured to implement the operations performed by DU1 in S801a, S804a, S805a, and S807a.

When the apparatus 900 is configured to implement the method implemented by CU2 in the second network device in FIG. 8, the processing module 910 may be configured to implement the operation performed by CU2 in S806, and the transceiver module 920 may be configured to implement the operations performed by CU2 in S801b, S804b, S805b, and S807b.

FIG. 10 is a diagram of a structure of a coverage and capacity optimization apparatus according to another embodiment of this application. The apparatus 1000 shown in FIG. 10 may be configured to implement the method performed by the first network device, the third network device, the second network device, or the terminal device in any one of the foregoing embodiments.

As shown in FIG. 10, the apparatus 1000 in this embodiment includes a memory 1010, a processor 1020, a communication interface 1030, and a bus 1040. The memory 1010, the processor 1020, and the communication interface 1030 implement mutual communication connections through the bus 1040.

The memory 1010 may be a read-only memory (read-only memory, ROM), a static storage device, a dynamic storage device, or a random access memory (random access memory, RAM). The memory 1010 may store a program. When the program stored in the memory 1010 is executed by the processor 1020, the processor 1020 is configured to perform the steps performed by the first network device, the third network device, the second network device, or the terminal device in any one of the foregoing embodiments.

The processor 1020 may be a general-purpose central processing unit (central processing unit, CPU), a microprocessor, an application-specific integrated circuit (application-specific integrated circuit, ASIC), or one or more integrated circuits, and is configured to execute a related program to implement the coverage and capacity optimization method in method embodiments of this application.

The processor 1020 may alternatively be an integrated circuit chip and has a signal processing capability. In an implementation process, the steps in the coverage and capacity optimization method in embodiments of this application may be completed by using an integrated logic circuit of hardware in the processor 1020 or instructions in a form of software.

The processor 1020 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component, and may implement or perform the methods, steps, and logical block diagrams disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1010. The processor 1020 reads information in the memory 1010, and completes, in combination with hardware in the processor 1020, functions that need to be performed by modules included in the coverage and capacity optimization apparatus in this application, for example, may perform the steps/functions performed by the first network device, the third network device, the second network device, or the terminal device in any one of the foregoing embodiments.

The communication interface 1030 may use but is not limited to a transceiver apparatus of a transceiver type, to implement communication between the apparatus 1000 and another device or a communication network.

The bus 1040 may include a path for transmitting information between components (for example, the memory 1010, the processor 1020, and the communication interface 1030) in the apparatus 1000.

It should be noted that the modules or components shown in the foregoing embodiments may be configured as one or more integrated circuits for implementing the foregoing methods, for example, one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form in which a processing element schedules program code, the processing element may be a general-purpose processor, for example, a central processing unit (central processing unit, CPU) or another processor that can invoke the program code, for example, a controller. For another example, these modules may be integrated together and implemented in a form of a system-on-a-chip (system-on-a-chip, SoC).

All or some of the foregoing embodiments may be implemented by using software, hardware, firmware, software modules, or any combination thereof. When software is used for implementation, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, into which one or more usable media are integrated. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The term "a plurality of" in this specification means two or more. The term "and/or" in this specification describes only an association relationship between associated objects and represents that three relationships may exist. For example, A and/or B may represent the following three cases: Only A exists, both A and B exist, and only B exists. In addition, the character "/" in this specification usually indicates an "or" relationship between associated objects, and the character "/" in a formula indicates a "division" relationship between associated objects. In addition, it should be understood that in the descriptions of this application, terms such as "first" and "second" are merely used for differentiation and description, but should not be understood as an indication or implication of relative importance, or should not be understood as an indication or implication of a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

## Claims

1. A coverage and capacity optimization method, wherein the method comprises:
predicting, in a first time period, first coverage and capacity of a first network device in a second time period, wherein the second time period is later than the first time period;
determining a first coverage and capacity optimization CCO configuration of the first network device in the second time period based on the first coverage and capacity; and
sending first information to a second network device, wherein the first information indicates the first CCO configuration.

2. The method according to claim 1, wherein the method further comprises:
sending second information to the second network device, wherein the second information indicates that the first CCO configuration is obtained through prediction.

3. The method according to claim 2, wherein the second information is content comprised in the first information.

4. The method according to claim 3, wherein the first information comprises at least one of the following content: a number of the first CCO configuration, a number of a cell to which the first CCO configuration is applied, the first CCO configuration, a valid time of the first CCO configuration, a reason for applying the first CCO configuration, an expected effect of applying the first CCO configuration, and prediction accuracy of the first CCO configuration.

5. The method according to claim 2, wherein the first CCO configuration comprises M CCO configurations, M is a positive integer greater than 1, and the second information is M.

6. The method according to any one of claims 1 to 5, wherein the method further comprises:
predicting, in the first time period, second coverage and capacity of the second network device in the second time period;
determining a second CCO configuration of the second network device in the second time period based on the second coverage and capacity; and
sending third information to the second network device, wherein the third information indicates the second CCO configuration.

7. The method according to any one of claims 1 to 6, wherein the method further comprises:
receiving fourth information from the second network device, wherein the fourth information indicates a CCO configuration determined by the second network device for the second network device.

8. The method according to any one of claims 1 to 6, wherein the method further comprises:
receiving fourth information from the second network device, wherein the fourth information is used to request to re-determine a CCO configuration.

9. The method according to any one of claims 1 to 8, wherein the method is performed by the first network device.

10. The method according to any one of claims 1 to 8, wherein the method is performed by a third network device; and
the method further comprises:
sending the first CCO configuration to the first network device.

11. The method according to claim 10, wherein the method further comprises:
receiving fifth information from the first network device, wherein the fifth information indicates a CCO configuration determined by the first network device for the first network device.

12. The method according to any one of claims 1 to 11, wherein the method further comprises:
receiving sixth information, wherein the sixth information comprises at least one of the following information: path information of a terminal device, channel quality measurement information of the terminal device, service information of the terminal device, a CCO configuration currently applied to a cell in the first network device, a CCO configuration currently applied to a cell in the second network device, a call drop rate of the terminal device, an access success rate of the terminal device, and an average access delay of the terminal device; and
predicting, in the first time period, the first coverage and capacity of the first network device in the second time period comprises:
predicting, in the first time period, the first coverage and capacity of the first network device in the second time period based on the sixth information.

13. The method according to any one of claims 1 to 12, wherein the first coverage and capacity are obtained through prediction based on a neural network model.

14. The method according to claim 13, wherein the method further comprises:
receiving seventh information, wherein the seventh information comprises at least one of the following information after a CCO configuration is applied to the first network device in the second time period: path information of the terminal device, channel quality measurement information of the terminal device, service information of the terminal device, a CCO configuration currently applied to the cell in the first network device, a CCO configuration currently applied to the cell in the second network device, a call drop rate of the terminal device, an access success rate of the terminal device, and an average access delay of the terminal device; and
optimizing the neural network model based on the seventh information.

15. A coverage and capacity optimization method, wherein the method is applied to a second network device, and the method comprises:
receiving first information, wherein the first information indicates a first coverage and capacity optimization CCO configuration of a first network device in a second time period.

16. The method according to claim 15, wherein the method further comprises:
receiving second information, wherein the second information indicates that the first CCO configuration is obtained through prediction.

17. The method according to claim 16, wherein the second information is content comprised in the first information.

18. The method according to claim 17, wherein the first information comprises at least one of the following content: a number of the first CCO configuration, a number of a cell to which the first CCO configuration is applied, the first CCO configuration, a valid time of the first CCO configuration, a reason for applying the first CCO configuration, an expected effect of applying the first CCO configuration, and prediction accuracy of the first CCO configuration.

19. The method according to claim 16, wherein the first CCO configuration comprises M CCO configurations, M is a positive integer greater than 1, and the second information is M.

20. The method according to any one of claims 15 to 19, wherein the method further comprises:
receiving third information, wherein the third information indicates a second CCO configuration of the second network device in the second time period.

21. The method according to any one of claims 15 to 20, wherein the method further comprises:
sending fourth information, wherein the fourth information indicates a CCO configuration determined by the second network device for the second network device.

22. The method according to any one of claims 15 to 20, wherein the method further comprises:
sending fourth information, wherein the fourth information is used to request to re-determine a CCO configuration.

23. The method according to any one of claims 15 to 22, wherein the method further comprises:
sending sixth information, wherein the sixth information comprises at least one of the following information: path information of a terminal device, channel quality measurement information of the terminal device, service information of the terminal device, a CCO configuration currently applied to a cell in the second network device, a call drop rate of the terminal device, an access success rate of the terminal device, and an average access delay of the terminal device.

24. The method according to claim 23, wherein the method further comprises:
sending seventh information, wherein the seventh information comprises at least one of the following information after a CCO configuration is applied to the first network device in the second time period: path information of the terminal device, channel quality measurement information of the terminal device, service information of the terminal device, a CCO configuration currently applied to the cell in the second network device, a call drop rate of the terminal device, an access success rate of the terminal device, and an average access delay of the terminal device.

25. A coverage and capacity optimization method, wherein the method is applied to a terminal device, and the method comprises:
sending sixth information, wherein the sixth information comprises at least one of the following information: path information of the terminal device, channel quality measurement information of the terminal device, and service information of the terminal device.

26. The method according to claim 25, wherein the method further comprises:
sending seventh information, wherein the seventh information comprises at least one of the following information after a CCO configuration is applied to a first network device in a second time period: path information of the terminal device, channel quality measurement information of the terminal device, and service information of the terminal device.

27. A coverage and capacity optimization apparatus, comprising functional modules configured to implement the method according to any one of claims 1 to 14, any one of claims 15 to 24, or either of claims 25 and 26.

28. A coverage and capacity optimization apparatus, comprising a processor, wherein the processor is coupled to a memory, the memory is configured to store a computer program, and when the processor invokes the computer program, the apparatus is enabled to perform the method according to any one of claims 1 to 14, any one of claims 15 to 24, or either of claims 25 and 26.

29. A computer program product, comprising computer program code, wherein when the computer program code is run on a computer, the computer is enabled to implement the method according to any one of claims 1 to 14, any one of claims 15 to 24, or either of claims 25 and 26.

30. A computer-readable medium, wherein the computer-readable medium stores program code for execution by a computer, and the program code comprises instructions for performing the method according to any one of claims 1 to 14, any one of claims 15 to 24, or either of claims 25 and 26.
